Europäisches Patentamt

European Patent Office

Office européen des brevets

(19)

(11) EP 0 901 285 A1

(12) EUROPEAN PATENT APPLICATION
published in accordance with Art. 158(3) EPC

(43) Date of publication:
10.03.1999 Bulletin 1999/10

(21) Application number: 97905407.9

(22) Date of filing: 26.02.1997

(51) Int. Cl.$^6$: H04N 7/173

(86) International application number:
PCT/JP97/00562

(87) International publication number:
WO 98/38798 (03.09.1998 Gazette 1998/35)

(84) Designated Contracting States:
DE FR GB

(71) Applicant:
MITSUBISHI DENKI KABUSHIKI KAISHA
Tokyo 100 (JP)

(72) Inventor: YAMAGUCHI, Tomohisa
Chiyoda-ku, Tokyo 100 (JP)

(74) Representative:
Pfenning, Meinig & Partner
Mozartstrasse 17
80336 München (DE)

(54) DEVICE, SYSTEM, AND METHOD FOR DISTRIBUTING VIDEO DATA

(57) In a video data distributing system in which video data are transmitted to a video data reproducing device from a video data distributing device (5) through a network (4) and the reproducing device reproduces the received video data, a network load measuring section (18) always monitors the load of the network (4). When the load of the network (4) is light, the distributing device (5) transmits all MPEG data (D1). When the load is heavy, the device (5) generates data (D3) of a small quantity obtained by thinning out as many frames as corresponding to the degree of the load from the MPEG data, etc., and transmits the data (D3) to the reproducing device.

FIG.31

## Description

TECHNICAL FIELD

The present invention relates to a video data distribution device for distributing video data in response to a request, a video data distribution system and a video data distribution method.

BACKGROUND ART

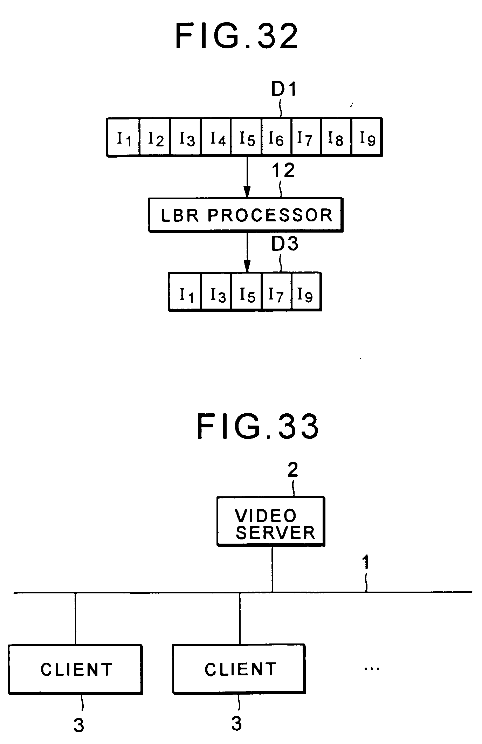

A background art will be described by using Fig. 33. Fig. 33 is a function block diagram showing a system construction for distributing video data with a high bit rate such as MPEG data and the like from a video server through a network to clients. In Fig. 33, numeral 1 denotes a network exclusive for video data distribution, 2 denotes a video server connected to the exclusive network 1 for distributing video data, and 3 denotes clients connected to the exclusive network 1 for receiving and playing back the video data distributed from the video server 2.

Operation will be described.

Upon receiving a data transfer request from the client 3, the video server 2 starts flowing the video data requested by the exclusive network 1. The client 3 receives and decodes the video data distributed through the exclusive network 1 to play back video.

In the system constituted as shown in Fig. 33, since the network exclusive for video distribution is used as the network, video playback can be performed substantially without dropping a frame if the network has a sufficient band width. However, the number of the clients 3 and the amount of video data to be distributed are increased, and the result is that frame dropping occurs over a long time because the video data cannot be transmitted.

Moreover, when the video having a high transfer rate like MPEG is used on a usual network having an insufficient band width except the network exclusive for video distribution, the network load is increased, and stable video distribution is not performed. Additionally, other traffics on the network are adversely affected in some case.

DISCLOSURE OF THE INVENTION

The invention has been developed to solve the aforementioned problem, and an object thereof is to provide a video data distribution device, a video data distribution system and a video data distribution method which alleviate network loads on video data distribution, stabilize the entire system connected to a network and which can perform a real time display with less disturbance at the time of playback.

To attain this object, the invention provides a video data distribution device which comprises a load measuring unit for measuring the load condition of a network or a video data distribution device, a data extractor for extracting the number of frame data corresponding to a measurement result of the load measuring unit from video data including plural frame data and a transmitter for transmitting the frame data extracted by the data extractor.

Furthermore, based on the measurement result of the load measuring unit, the data extractor extracts all the frame data of the video data when the load is low, and extracts a part of the frame data of the video data when the load is high.

Moreover, by thinning the frame data among plural frame data in the video data, the number of frame data based on the measurement result of the load measuring unit is extracted.

Additionally, the data extractor extracts the video data with inter-frame compressed frame data deleted therefrom from the video data having intra-frame compressed frame data and inter-frame compressed frame data based on the measurement result of the load measuring unit, and the transmitter transmits the video data extracted by the data extractor.

Furthermore, the video data is MPEG data.

Moreover, the data extractor generates MPEG data with P picture deleted therefrom from MPEG data having I picture and P picture based on the measurement result of the load measuring unit.

The data extractor also generates MPEG data with B picture deleted therefrom from MPEG data having I picture and B picture based on the measurement result of the load measuring unit.

The data extractor further generates MPEG data with P picture and B picture deleted therefrom from MPEG data having I picture, P picture and B picture based on the measurement result of the load measuring unit.

The data extractor also extracts plural I pictures from MPEG data having plural I pictures at intervals corresponding to the measurement result of the load measuring unit.

The device of the invention is also provided with an encoder for encoding image signals from a video camera in real time and generating video data having plural frame data and a buffer for temporarily storing the video data generated by the encoder. In the data extractor, by thinning frame data among the plural frame data in the video data stored in the buffer, the number of frame data based on the measurement result of the load measuring unit is extracted from the video data.

The invention further provides a video data distribution device which comprises a load measuring unit for measuring the load condition of a video data distribution system, a data extractor for extracting the number of frame data corresponding to a measurement result of the load measuring unit from video data including plural frame data and a transmitter for transmitting the frame data extracted by the data extractor via a network, and a video data playback device for receiving the frame data transmitted from the transmitter of the video data distribution device via the network and playing back the received frame data.

Furthermore, the load measuring unit measures a load of a processor for controlling operation of the video data playback device.

Moreover, plural video data playback devices are connected to the network, and one frame data transmitted from the transmitter of the video data distribution device onto the network is received by each of the plural video data playback devices.

The video data playback device also transmits a data transfer request in which data amount is designated to the video data distribution device plural times, and upon receiving the data transfer request plural times, the video data distribution device transmits frame data based on the data amount designated by each data transfer request for each data transfer request.

The video data playback device further transmits a data transfer request in which video data is designated, and upon receiving the data transfer request, the video data distribution device transmits plural packets having a part of frame data of the video data at predetermined intervals.

The invention also provides a video data distribution method which comprises a transmission level determining step of determining a transmission level in accordance with a load of the video data distribution system, a data extracting step of extracting the number of frame data corresponding to the transmission level determined in the transmission level determining step from video data including plural frame data and a transmitting step of transmitting the frame data extracted in the data extracting step.

Furthermore, the transmission level determining step is performed in the video data playback device, and is provided with a load measuring step of measuring a load of a processor for controlling operation of the video data playback device, a determining step of determining a transmission level in accordance with a measurement result of the load measuring step and a transmission level transmitting step of transmitting the transmission level determined by the determining step from the video data playback device to the video data distribution device.

Furthermore, a playback step is provided in which the video data playback device receives the frame data transmitted by the transmitting step and plays back the received frame data.

Moreover, in the transmission level determining step, when the video data playback device quickly forwards and plays back the video data, the transmission level is determined in such a manner that the video data with a part of the frame data thinned from plural frame data included in the video data is extracted. When the quick forwarding playback is not performed, the transmission level is determined in such a manner that the frame data of the video data is not thinned.

Additionally, in the data extracting step, when the video data playback device quickly forwards and plays back the video data including plural frame data and voice data, the voice data is deleted from the video data and the number of frame data corresponding to the transmission level is extracted to generate video data. In the transmitting step, the video data generated in the data extracting step is transmitted.

BRIEF DESCRIPTION OF THE DRAWINGS

Fig. 1 is a system construction view of a client server system according to first, second and fourth embodiments of the invention.
Fig. 2 is a software construction view of an LBR data distribution/playback section according to first, third and fourth embodiments of the invention.
Fig. 3 is a sequence diagram showing a client initiative type operation of the invention.
Fig. 4 is a flowchart showing a processing of a client program according to the first embodiment of the invention.
Fig. 5 is a view showing a data structure of an open request according to the first embodiment of the invention.
Fig. 6 is a view showing a data structure of a read request according to the first embodiment of the invention.
Fig. 7 is a flowchart showing a CPU load measurement process according to the first embodiment of the invention.
Fig. 8 is a flowchart showing a network load measurement process according to the first embodiment of the invention.
Fig. 9 is a view showing an offset adjustment process according to the first embodiment of the invention.
Fig. 10 is a flowchart showing an MPEG data distribution process of a video server according to the first embodiment of the invention.

Fig. 11 is a flowchart showing an LBR processing according to the first embodiment of the invention.

Fig. 12 is a flowchart showing a picture checking process according to the first embodiment of the invention.

Fig. 13 is a flowchart showing an I picture checking process according to the first embodiment of the invention.

Fig. 14 is a flowchart showing an IP picture checking process according to the first embodiment of the invention.

Fig. 15 is a flowchart showing an IPB picture checking process according to the first embodiment of the invention.

Fig. 16 is a table showing thinning intervals and judgment as to whether or not to fetch a found picture.

Fig. 17 is a view showing a data structure of an MPEG1 system.

Fig. 18 is a view showing data structure up to a GOP layer of the MPEG1 system.

Fig. 19 is a sequence diagram of a video distribution process according to the first embodiment of the invention.

Fig. 20 is a sequence diagram of the video distribution process according to the first embodiment of the invention.

Fig. 21 is a software construction view of an LBR data distribution/playback section according to the second embodiment of the invention.

Fig. 22 is a sequence diagram showing a server initiative type operation of the invention.

Fig. 23 is a flowchart showing a processing of a client program according to the second embodiment of the invention.

Fig. 24 is a flowchart showing a distribution process of a video server according to the second embodiment of the invention.

Fig. 25 is a system construction view of a client server system according to the third embodiment of the invention.

Fig. 26 is a sequence diagram of a video distribution process according to the third embodiment of the invention.

Fig. 27 is a flowchart showing a processing of a server program according to the third embodiment of the invention.

Fig. 28 is a flowchart showing a processing of a client program according to the third embodiment of the invention.

Fig. 29 is a flowchart showing a processing of a server program according to the fourth embodiment of the invention.

Fig. 30 is a flowchart showing a processing of a client program according to the fourth embodiment of the invention.

Fig. 31 is a function block diagram of a video server according to the invention.

Fig. 32 is a function block diagram showing an LBR processing according to the invention.

Fig. 33 is a system construction view of a background-art video server.

BEST MODE OF PRACTICING THE INVENTION

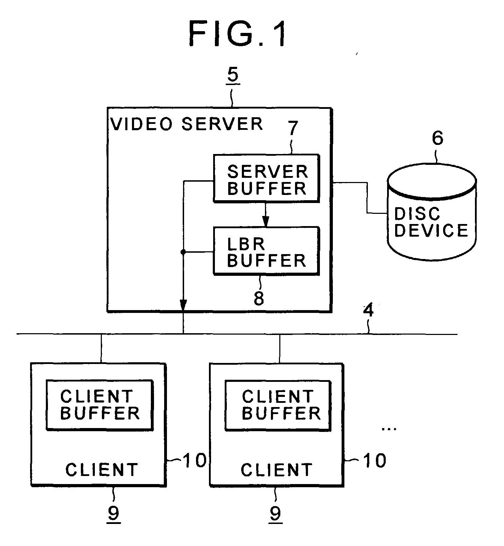

Fig. 1 illustrates an embodiment of a system construction of a client server system in the present invention. In the embodiment described below, MPEG data is used as video data.

In Fig. 1, numeral 4 denotes a usual network in which the video data and other data flow, 5 denotes a video server for distributing the MPEG data through the network 4 and, for example, a computer with a known OS mounted thereon having a network server function is used. Numeral 6 denotes a disc device for storing the MPEG data, and 7 denotes a server buffer for reading the MPEG data from the disc device 6. Numeral 8 denotes an LBR buffer used for writing LBR data when the MPEG data read by the server buffer 7 is converted to LBRed data (hereinafter referred to as the LBR data; Low Bit Rate), 9 denotes a client which receives the distributed LBR data to play back the LBR data and, for example, a computer with OS of Microsoft Co. having a network function, i.e., Windows 95 mounted thereon is used. The client 9 can simultaneously execute application other than video data playback. Numeral 10 denotes a client buffer for temporarily storing the MPEG data distributed from the video server 5.

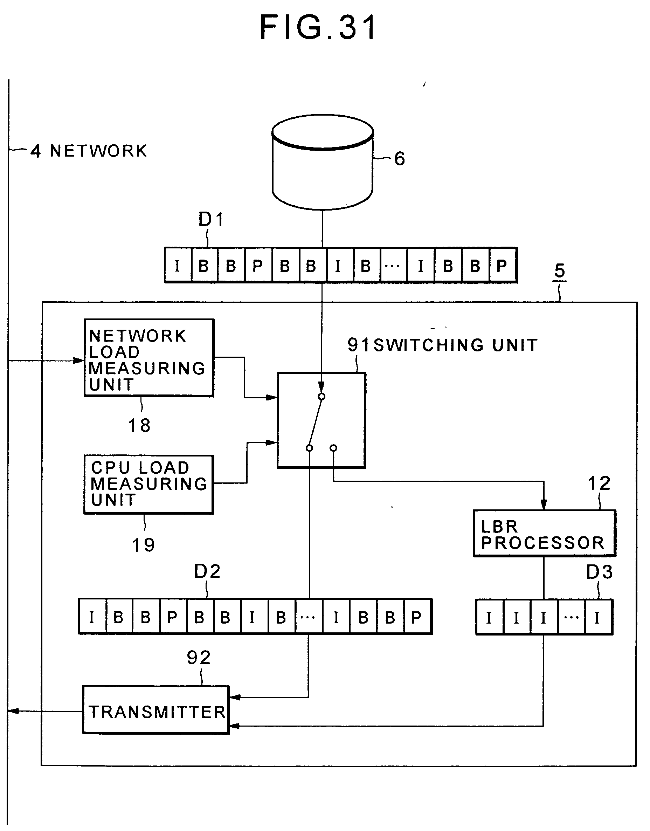

Fig. 31 is a function block diagram showing a function of the video server 5. In Fig. 31, the same reference numerals as those in Fig. 1 designate the same or equivalent sections. Numeral 18 denotes a network load measuring unit for measuring a load of the network 4, and 19 denotes a CPU load measuring unit for measuring a CPU load of the video server 5. A CPU of the video server 5 is a processor for controlling operation of the video server 5. Numeral 91 denotes a switching unit for selectively outputting MPEG data D1 received from the disc device 6 to a transmitter 92 or an LBR processor 12 based on load information measured by the network load measuring unit 18 or the CPU load measuring unit 19. Numeral 12 denotes the LBR processor for decreasing data amount of the MPEG data D1 received via the switching unit 91 from the disc device 6. Numeral 92 denotes the transmitter for transmitting full data of the MPEG data received from the switching unit 91 or the MPEG data (LBR data) having a little data amount received from the LBR processor 12 onto the network 4. Details of an LBR processing will be described later.

Here, the client 9 is a video playback device. The network load measuring unit 18 or the CPU load measuring unit 19 is a load measuring unit. The LBR processor 12 is a data extractor.

Operation of the video server 5 will be described based on Fig. 31.

The network load measuring unit 18 constantly monitors the load of the network 4. The CPU load measuring unit 19 also constantly monitors the CPU load. Upon receiving a data transfer request from the client 9, the video server 5 reads the full data D1 of the MPEG data from the disc device 6. The switching unit 91 receives the full data D1 of the MPEG data, selects the transmitter 92 or the LBR processor 12 based on the load information received from the network load measuring unit 18 and the CPU load measuring unit 19, respectively, and outputs the full data D1. Here, the full data means the video data not subjected to the LBR processing.

For example, when the load of the network 4 and the CPU load are low, the switching unit 91 selects the transmitter 92 and outputs full data D2. The full data D2 is the same as the full data D1.

On the other hand, when the load of the network 4 and the CPU load are high, the switching unit selects the LBR processor 12 and outputs the full data D1 of the MPEG data. It is determined based on a predetermined threshold whether the load is high/low. The LBR processor 12 having received the full data D1 performs the LBR processing, deletes, for example, P picture and B picture from the full data D1 and extracts I picture to generate LBR data D3, thereby decreasing the data amount of the MPEG data. Subsequently, the LBR data D3 having the data amount decreased by the LBR processor 12 is outputted to the transmitter 92. Each of the I picture, B picture and P picture indicates image data of one frame, i.e., frame data. Details of each picture will be described later.

Upon receiving the full data D2 or the LBR data D3 from the switching unit 91 or the LBR processor 12, the transmitter 92 transmits the received MPEG data D2 and D3 onto the network 4. The MPEG data D2 and D3 transmitted to the network 4 are received by the client 9, and the client 9 plays back the received MPEG data D2 and D3.

In the above, the embodiment for deleting the B picture and the P picture has been described but, as shown in Fig. 32, the LBR processor 12 can extract the LBR data D3 by deleting the I picture from between the I pictures of the full data D1 constituted of plural I pictures.

As aforementioned, according to the embodiment of the invention, since the amount of the MPEG data transmitted onto the network 4 is adjusted in accordance with a system load such as the load of the network 4, the CPU load and the like, a phenomenon in which video played back by the client 9 is not updated over a long time is inhibited, and real-time playback can be performed.

Furthermore, even in a network in which traffics other than the video data are transmitted/received, the transmission of the other traffics are prevented from being in a waiting condition over a long time because the network is occupied by the video data over a long time, and the transmission amount of the video data is decreased in accordance with the network load or the like. Therefore, other important traffics can be transmitted.

FIRST EMBODIMENT

The video server 5 and the client 9 of a first embodiment according to the invention will be described in detail. The hardware of the entire system is constructed as shown in Fig. 1.

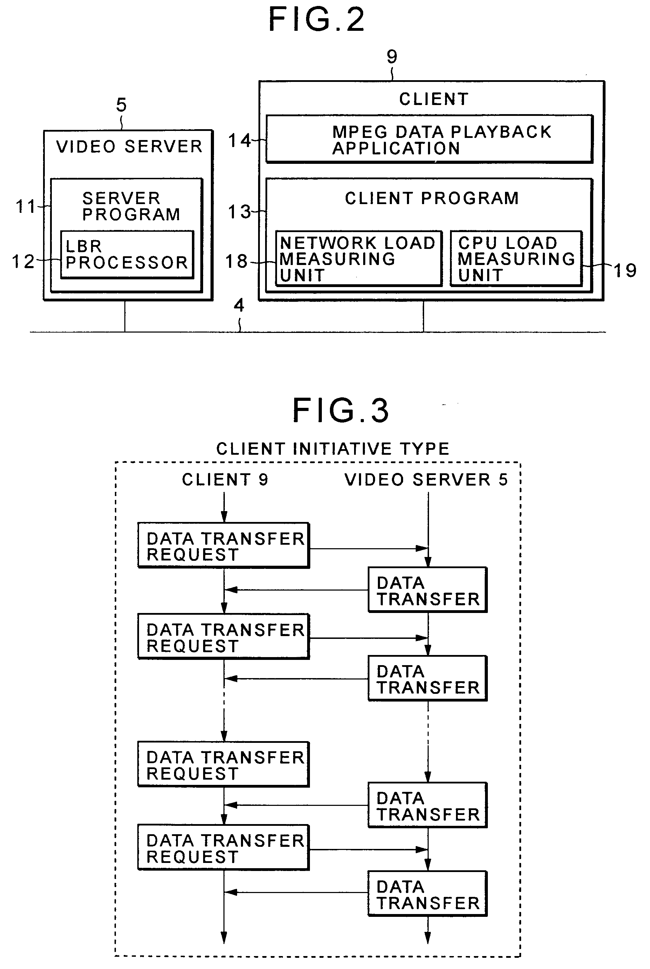

Fig. 2 illustrates a software construction of distribution/playback section of MPEG data and LBR data of the video server 5 and the client 9. In Fig. 2, the same reference numerals as those in Fig. 1 designate the same or equivalent sections. Numeral 11 denotes a server program for distributing the MPEG/LBR data, and 12 denotes an LBR processor for converting the MPEG data into LBR data. Numeral 13 denotes a client program for processing the MPEG/LBR data transmitted from the video server 5, 14 denotes a known MPEG data playback application, 18 denotes a network load measuring unit for measuring a load of the network 4, and 19 denotes a CPU load measuring unit for measuring a client CPU load. A client CPU is a processor for controlling operation of the client 9.

The video data distribution system of the embodiment is operated in a client initiative mode, i.e., the LBR data is generated and distributed by the video server 5 in real time in response to a data transfer request from the client 9. In the client initiative type, as shown in Fig. 3, in response to the data transfer request from the client 9, the video server 5 transfers the requested video data. The client 9 determines a transfer size, offset, transfer mode (MPEG data request or LBR data request) and the like in accordance with the load of the network 4, the load of the client 9 itself, LBR or special playback request and the like, and requests the video server 5 for the video data.

Moreover, the client initiative type can be switched to a server initiative type described in a second embodiment.

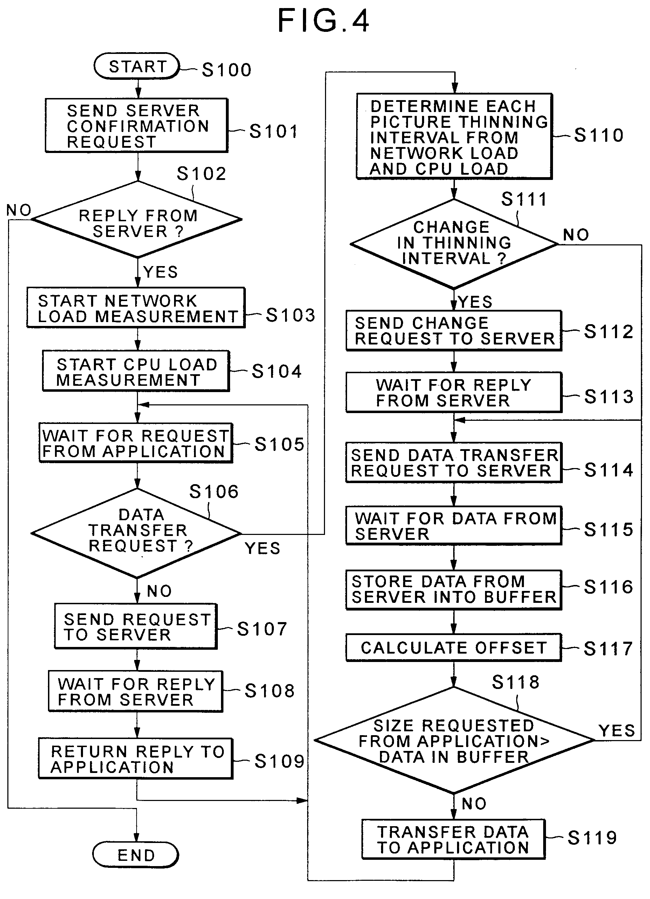

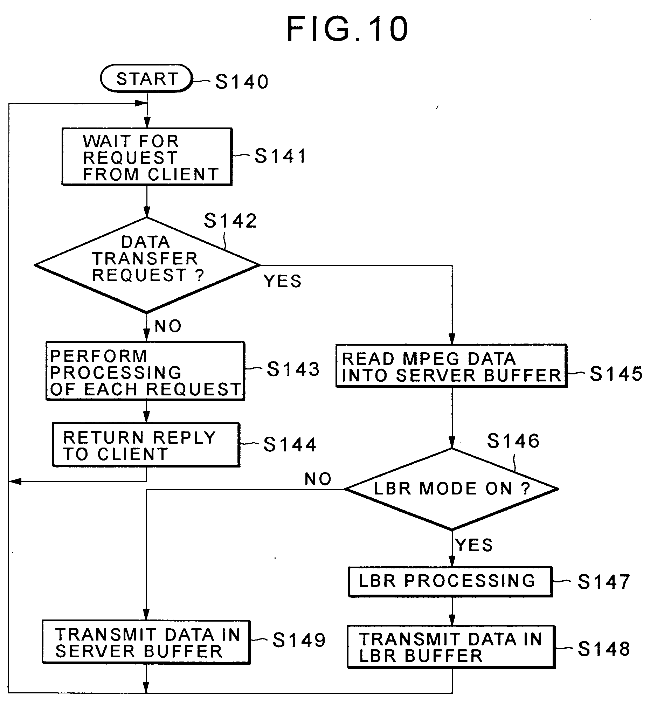

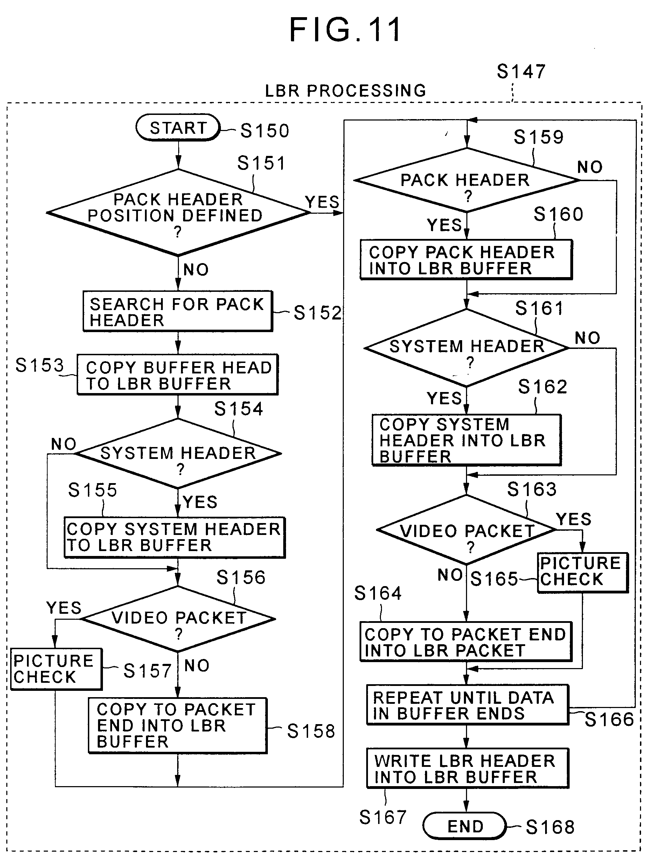

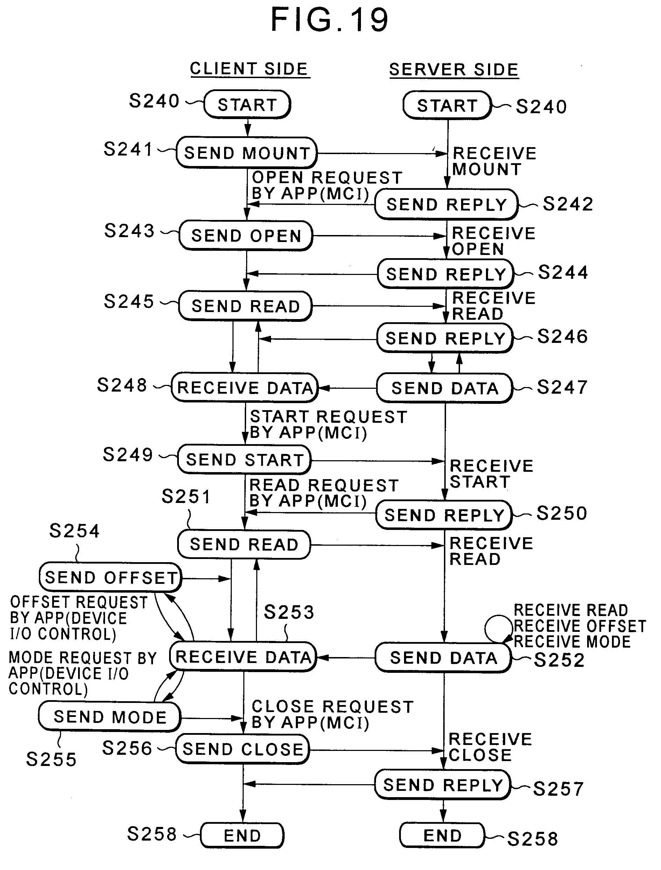

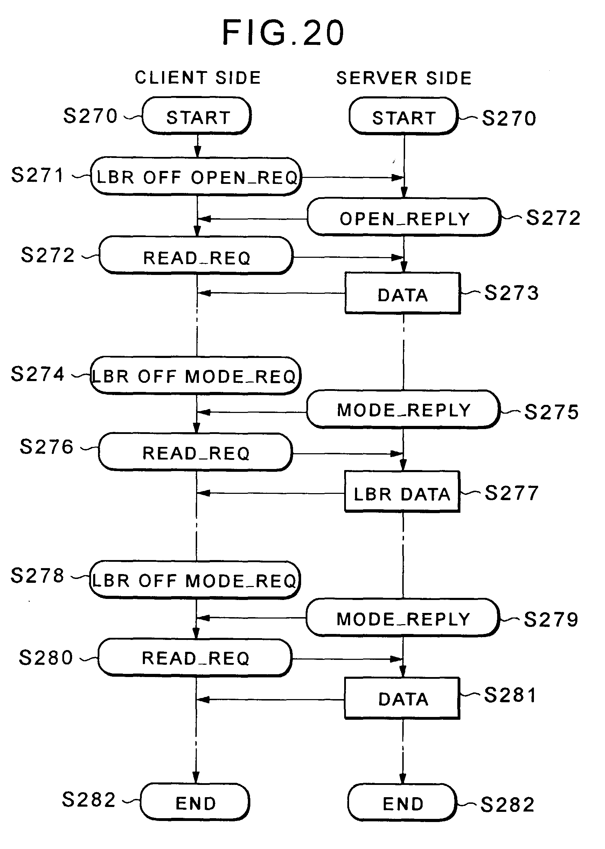

The system of the first embodiment is constructed as aforementioned. Operation of LBR data distribution/playback will be described in detail based on a server program shown in Figs. 10 to 15, processing flowcharts of a client program shown in Figs. 4, 7 and 8 and a protocol between the client and the server shown in Figs. 19 and 20.

1. Operation of Client Program

1.1 Initialization

First, at step S101 of Fig. 4, immediately after start the client program 13 sends a MOUNT request to the server program 11 as a server confirmation request (step S241 of Fig. 19). This is performed to confirm whether or not the server is started. When no reply is returned from the server, it is determined that the server is not started, an error message is outputted and the operation is finished. When a reply is returned, the process advances to step S103.

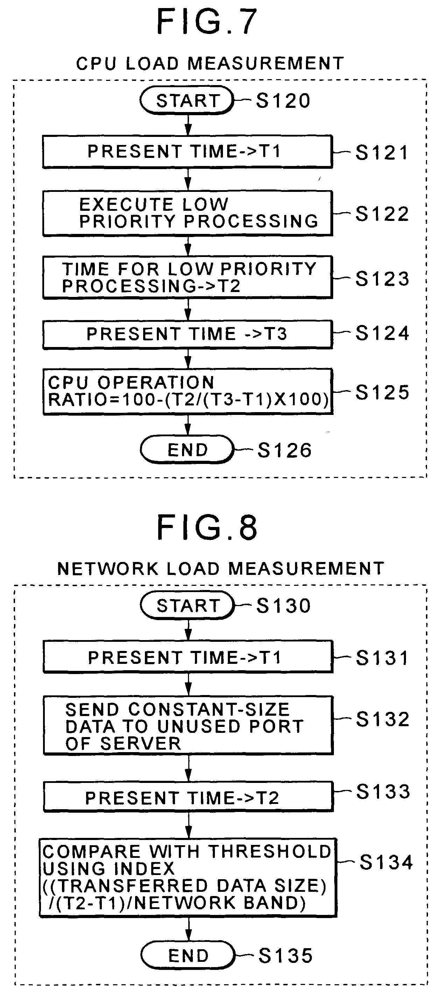

Subsequently, the client program 13 measures the network load and the CPU load (steps S103 and S104). The processing is executed as separate processes or separate threads at constant intervals. The processing will be described later by using Figs. 7 and 8.

Subsequently, various requests sent from the MPEG data playback application 14 are waited for (step S105).

Upon receiving a request from the MPEG data playback application 14, the client program 13 judges whether or not the received request is a data transfer request (step S106). When it is the data transfer request, the process advances to step S110, while when it is not the data transfer request, the process advances to step S107.

1.2 Processing in Response to Requests other than Data Transfer Request

In steps S107 to S109, the request received from the MPEG data playback application 14 is transmitted to the server (step S107), the return of a reply is waited for (step S108), and the returned reply is transmitted to the MPEG data playback application 14 (step S109). After the step S109 is completed, the process returns to the step S105 and again waits for a request. Here, as one of the requests transmitted at the step S107, there is an OPEN request (step S243 of Fig. 19). The MPEG data playback application 14 transmits the OPEN request for designating a file as an object of data transfer before sending the data transfer request.

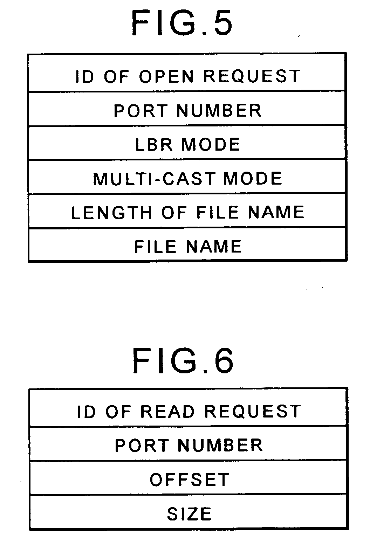

Data structures of the OPEN and READ requests transferred to the server program 11 are illustrated in Figs. 5 and 6. The OPEN request includes data (thinning interval) indicative of LBR mode designated by the MPEG data playback application 14, i.e., whether the full data or the LBR data is to be transferred.

1.3 Processing in Response to Data Transfer Request

On the other hand, when the request from the MPEG data playback application 14 is the data transfer request, the thinning interval of each picture is determined from the network load and the CPU load obtained at the steps S103 and S104 (step S110). The step S110 is a determining step. The thinning interval is a transmission level. Here, to determine the thinning interval of each picture is, for example, to select one transmission method from following transmission methods:

(1) to transmit data all of IPB;
(2) to transmit data only of IP;
(3) to transmit data only of I; and
(4) to transmit data constituted by extracting a part of the data only of I at a predetermined interval.

The method (1) is selected when the load is light, (2) is selected when the load is lighter, (3) is selected when the load is further lighter and (4) is selected when the load is lightest. Here, P and B can also be designated in such a manner that data is extracted at a predetermined interval. Therefore, the thinning interval can be constituted of, for example, picture designation data indicating which picture is to be extracted and interval designation data designating extracting interval of each picture designated in the picture designation data. It is determined based on a predetermined threshold which processing of the above (1) to (4) is to be executed.

Subsequently, it is judged whether or not there is a change in the thinning interval (Step S111), and when there is a change, the process advances to the next step S112. When there is no change, the process advances to step S114 to transmit the data transfer request to the video server 5.

1.4 Change Request Transmission Process

When there is a change, the client 9 transmits a change request to the video server 5. The change request transmitting process is a transmission level transmitting step. The change request includes an identifier indicative of a change request order and an identifier indicative of (1) to (4) described in the above step S110.

Upon receiving the change request, the server program 11 rewrites a transfer mode flag stored therein in accordance with the mode designated by the change request, and returns a reply.

Upon receiving the reply from the video server 5 (step S113), the client program 13 advances to step S114 and shifts to a processing of the data transfer request.

1.5 Data Transfer Request Processing

The client program 13 designates a size requested by the MPEG data playback application 14 and transmits the data transfer request to the video server 5 (step S114, step S245 of Fig. 19). Subsequently, transmission of data from the video server 5 is waited for (step S115). Upon receiving the data (step S248 of Fig. 19), the received data is stored in the client buffer 10 (step S116), and offset calculation is performed concerning the received data. For the offset calculation, since the data transmitted from the video server 5 is sometimes converted to the LBR data and differs from the data size requested at the step S114, the offset is calculated from the total data amount stored in the client buffer 10 by repeating the processing of the steps S114 to S117.

Subsequently, it is judged whether or not the data received from the video server 5 reaches the size requested by the MPEG data playback application 14 (step S118). When the size is not reached, the process returns to the step S114 to transmit the data transfer request again. When it is reached, the data stored in the client buffer 10 is transferred to the MPEG data playback application 14 (step S119). Specifically, judgment is made based on the offset calculated at the step S117.

After the step S119 ends, the process returns to the step S105 to repeat the waiting for the request from the MPEG data playback application 14 again. The client program 13 is operated as aforementioned.

1.6 CPU Load Measuring Process

An example of a CPU load measuring process as a load measuring step will be described using Fig. 7. In the CPU load measuring process, first the present time (T1) is measured and stored (step S121). Subsequently, low priority processing is executed (step S122), and time necessary for the processing, i.e., time (T2) for which the low priority processing actually uses CPU is measured and stored (step S123). Subsequently, the present time (T3) is measured again (step S124). CPU operation ratio is obtained from the time information as follows (step S125):

$$\text{CPU Operation Ratio (\%)} = 100 - (T2/(T3-T1) \times 100)$$

The higher the CPU operation ratio is, the higher the CPU load becomes, while the lower the CPU operation ratio is, the lower the CPU load becomes.

1.7 Network Load Measuring Process

An example of a network load measuring process as a load measuring step will be described using Fig. 8. In the network load measuring process, first the present time (T1) is measured and stored (step S131). Subsequently, data with a constant size (e.g., 8KB) is sent to an unused port in the video server 5 (step S132), and spent time (T2) is measured and stored (S133). Subsequently, the present time (T3) is measured again (step S134). An index for obtaining a network load from the time information is obtained as follows (step S134):

$$\text{Network Load} = ((\text{Transferred Data Size})/(T2-T1))/\text{Network Band})$$

1.8 Offset Adjusting Process

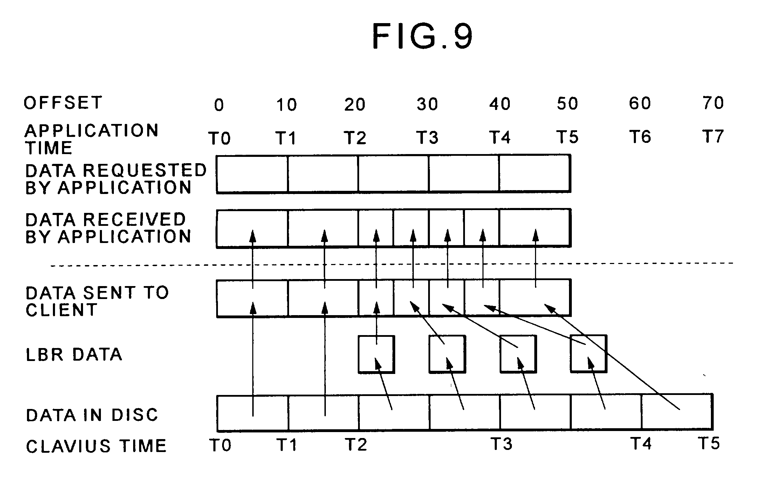

An offset adjusting process will be described using Fig. 9. Additionally, for the simplicity of description, two LBR modes are used: LBR processing is performed (ON) and LBR processing is not performed (OFF). In case of ON, the picture designating data and the interval designating data have fixed values. In the example, the processing is started in the LBR mode OFF at time T0, the LBR mode ON is used at time T2, and further the LBR mode OFF is used at time T5. Additionally, for the simplicity of description the amount of the LBR data is set to half the amount of the original MPEG data (full data).

First, the MPEG data playback application 14 issues a data request at time T0, offset 0 and size 10. The request is passed through the client program 13, the server program 11 and the client program 13, and the data of size 10 is sent. Subsequently, the MPEG data playback application 14 issues a data request at time T1, offset 10 and size 10. The data of size 10 is sent in the same manner as aforementioned.

Subsequently, the MPEG data playback application 14 requests for the LBR mode ON at time T2 and requests for data of offset 20 and size 10. The client program 13 sends an LBR mode ON request to the server program 11, and requests for data of offset 20 and size 10. The server program 11 fetches the data of offset 20 and size 10, converts the data to LBR data of size 5, and sends the data to the client program 13.

The client program 13 compares the size of the LBR data sent from the server program 11 with the size requested from the MPEG data playback application 14, and requests the server program 11 for data of offset 30 and size 10 because the sent data size does not satisfy the request size from the MPEG data playback application 14. In the same manner as aforementioned, the server program 11 sends the LBR data to the client program 13.

The client program 13 combines the previously sent data size and the present sent data size, and compares the size with the request size from the MPEG data playback application 14. At this time, since the request size from the MPEG data playback application 14 is satisfied, the data sent from the server program 11 is sent to the MPEG data playback application 14.

The client program 13 stores both the offset and size from the MPEG data playback application 14 and the offset and size of an actually used video file, and manages a difference between the request size from the MPEG data playback application 14 and the data size sent from the server program 11.

Subsequently, the MPEG data playback application 14 requests for data at time T3 in the same manner as aforementioned. In the same manner as aforementioned, the client program 13 requests the server program 11 for data until the request size from the MPEG data playback application 14 is satisfied.

The server program 11 sends the LBR data to the client program 13 in the same manner as aforementioned.

Subsequently, the MPEG data playback application 14 requests for the LBR mode OFF at time T4, and requests for data of offset 40 and size 10. The client program 13 sends an LBR mode OFF request to the server program 11 while requesting for data of offset 60 and size 10. The server program 11 fetches the data of offset 60 and size 10, and sends the data to the client program 13.

The MPEG data playback application 14 performs playback with the data sent as aforementioned. Additionally, when the MPEG data playback application 14 changes a playback position, the offset value is initialized by making the same the offset requested by the MPEG data playback application 14 and the offset of the actually used video file.

1.9 Judgment as to Whether to Transfer LBR Data or Full Data

Here, the MPEG data playback application 14 determines with which of the usual data and the LBR data the playback of the video data is started. When the playback is started with the LBR data, the data can be sent to the client program 13.

The MPEG data playback application 14 can also request for transmission change of the data sent from the server program 11 from the usual data to the LBR data or from the LBR data to the usual data at any time.

2. Operation of Server Program

2.1 Entire Operation of Server Program

Operation of the server program 11 will be described based on Fig. 10. The server program 11 waits for a request from the client 9 (step S141), and upon receiving the request, judges whether or not the received request is the data transfer request (step S142).

When the request is not the data transfer request, a processing is performed in response to the request (step S143), and a processing result is transmitted to the client 9 as a reply (step S144). Here, the processing performed at the step S143 is, for example, opening, closing or another processing of a file of the MPEG data. Moreover, when a change of the LBR mode is instructed from the client 9, the LBR mode is changed at the step S143.

On the other hand, when the request is the data transfer request, the MPEG data is read from the disc device 6 and the read data is stored in the server buffer 7. At this time, the read MPEG data is MPEG data having a request size designated by the client 9 (step S145). Subsequently, by examining the LBR mode stored inside, it is judged whether or not an LBR processing is necessary (step S146).

When the LBR processing is unnecessary, the MPEG data stored in the server buffer 7 is transmitted to the client 5 (step S149, step S247 of Fig. 19).

On the other hand, when the LBR processing is necessary, the LBR processing is performed concerning the MPEG data stored in the server buffer 7 in accordance with the LBR mode, and the LBR processed MPEG data is stored in the LBR buffer 8 (step S147). Subsequently, the MPEG data stored in the LBR buffer 8 is transmitted to the client 9 (step S148). The step S148 is a transmitting step. The LBR processing will be described later.

2.2 LBR Processing

The LBR processing as a data extracting step will be described in detail.

In the LBR processing, a predetermined picture is extracted from the MPEG data having I picture, P picture and B picture to generate MPEG data having a small data size.

2.2.1 Data Structure of MPEG1

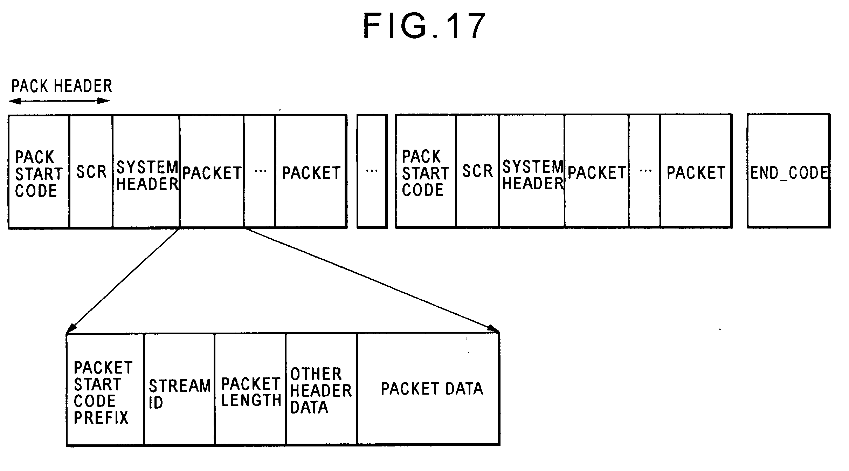

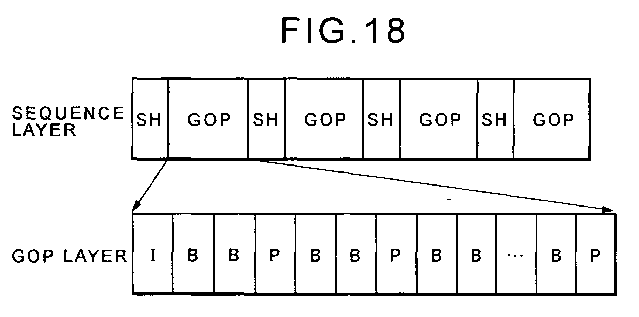

First, MPEG1 data structure will be described. Fig. 17 shows an MPEG1 system, and Fig. 18 shows each construction of MPEG1 video up to GOP (Group of Pictures) layer. The structure of the MPEG1 data is described in detail in document ISO/IEC11172-1/2: "Information Technology-Coding of Moving Pictures and Associated Audio for Digital Storage Media at up to about 1.5 Mbit/S", INTERNATIONAL STANDARD, 1993.

In the MPEG1 system MPEG1 video and MPEG1 audio are synchronized and multiplexed, and the MPEG1 system is used in case of actual application. As shown in Fig. 17, PACK START CODE, Packet Start code or another start code is data of 32 bits, and the data is arranged by byte. Additionally, bit patterns of the start codes are not generated otherwise in a MPEG1 bit stream, and are used for identifying various headers. An information group in which an outline of the entire stream is described (e.g., a bit rate or the like) is included in a system header. A time stamp (PTS, DTS) or another information is included in other header data. An SCR (System Clock Reference) is information for setting/calibrating the value of a time reference or STC (System Time Clock, synchronous signal as a basis) to a value intended on the side of an encoder in an MPEG system decoder including video and audio decoders. A GOP of MPEG1 video is a random access unit in the MPEG1 video, and the GOP is usually a playback time of about 0.5 second.

Fig. 18 shows a content in detail when the packet data of Fig. 17 is video data, and I, P and B in a GOP layer denote I picture, P picture and B picture, respectively. The content of each picture is as follows:

I picture: Intra-Picture (intra-frame encoded image)
The I picture is an encoded image plane only from the information irrespective of pictures before and after the I picture, and generated without using an inter-frame prediction. The I picture is a sort of intra-frame compressed frame data.
P picture: Predictive-Picture (inter-frame forward-direction predictive encoded image)
The P picture is an image plane formed by performing prediction from I or P picture. Specifically, the picture is represented by a difference from the previous I or P picture. The P picture is a sort of inter-frame compressed frame data.
B Picture: Bidirectionally predictive-Picture (Bidirectionally predictive encoded image)
The B picture is an image plane formed through bi-directional prediction being an MPEG characteristic. Specifically, the picture is represented by a difference from the I or P picture before or after the B picture. The B picture is a sort of inter-frame compressed frame data.

2.2.2 Description of Operation of LBR Processing

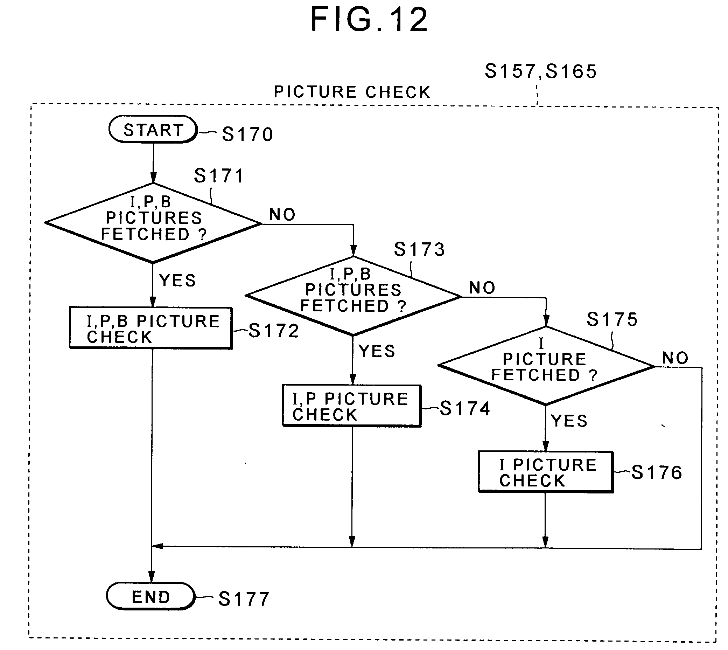

Details of an LBR processing performed by the LBR processor 12 will be described based on Fig. 12.

First, the LBR processor 12 judges whether a pack header position of the MPEG data stored in the server buffer 7 has been defined (step S151), and when it has been defined, the process advances to step S159. When it has not been defined, the process advances to step S152 to define the pack header position.

In the defining of the pack header position, first the content of the MPEG data stored in the server buffer 7 is examined sequentially from the top of the data, pack header data is searched for (step S152), and the found pack header is copied to the LBR buffer 8 (step S153).

Subsequently, it is checked whether the data following the pack header is a system header (step S154). When it is the system header, the system header portion is copied from the server buffer 7 to the LBR buffer 8 (step S155). When it is not the system header, the processing of the step S155 is skipped and the process advances to step S156.

After the step S154 or S155 ends, it is checked whether the subsequent data in the server buffer 7 is a video packet (step S156). When it is the video packet, picture checking of step S157 is performed. Through the picture checking, a predetermined picture is extracted into the LBR buffer 8. The picture checking will be described in detail using Fig. 12. On the other hand, when it is not the video packet, the process goes to step S158, and the data to the end of the packet is copied from the server buffer 7 to the LBR buffer 8. There is an audio packet as a packet except the video packet, and the audio packet is copied to the LBR buffer 8.

Subsequently, it is checked whether the next data is a pack header (step S159). When it is the pack header, the pack header is copied from the server buffer 7 to the LBR buffer 8. When it is not the pack header, the process advances to step S161.

After the step S159 or S160 ends, it is checked whether the next data is a system header (step S161). When it is the system header, the system header is copied from the server buffer 7 to the LBR buffer 8 (step S162). When it is not the system header, the process advances to step S163.

After the step S161 or S162 ends, it is checked whether the subsequent data is a video packet (step S163). When it is the video packet, picture checking is performed (step S165). The picture checking is the same as the processing of the above step S157. On the other hand, when it is not the video packet, the data to the end of the packet is copied from the server buffer 7 to the LBR buffer 8 (step S164).

After the step S164 or S165 ends, it is checked to the end of the MPEG data in the server buffer 7 whether the above processing is completed (step S166). When the processing is not completed to the end of the MPEG data in the server buffer 7, the process advances to step S159, and the processing of steps S159 to S165 is repeated.

On the other hand, when the processing is completed to the end of the MPEG data in the server buffer 7, the LBR header is written to the top of the LBR buffer 8, i.e., the top of the packet (step S167). The LBR header is a header for distinguishing the MPEG data from the LBR data. At this time, if the packet size is changed when the I, P or B picture is fetched (at S155 or S165 of picture checking), the length of the packet in the packet header is changed based on the length of the packet written to the LBR buffer. After the step S167 ends, the LBR processing (step S147) is completed (step S168).

The LBR processing is performed as aforementioned.

2.2.3 Picture Checking

The picture checking described in the above steps S157 and S165 will be described in detail using Figs. 12 to 15.

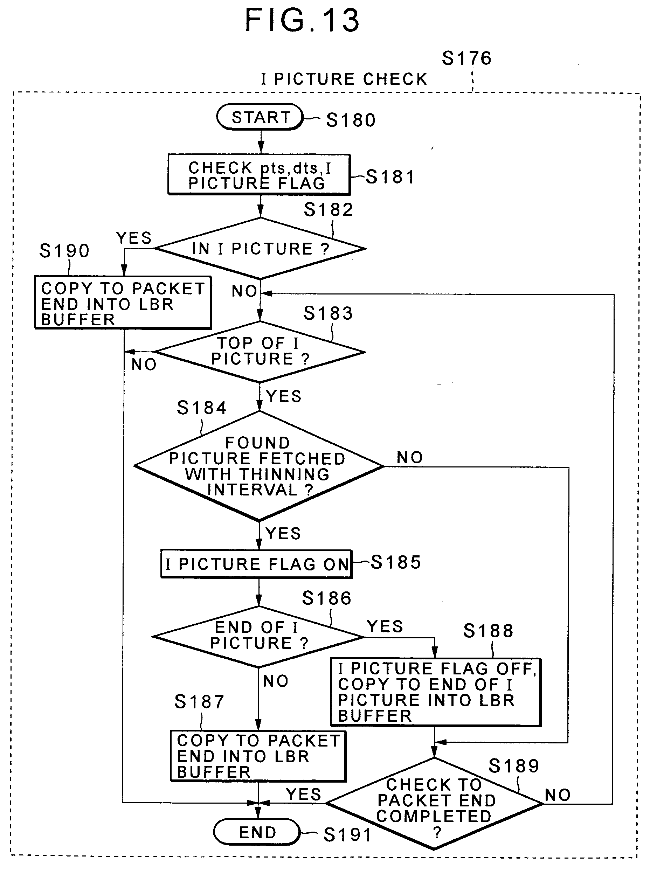

Fig. 12 shows three types of picture checking, and details of the picture checking will be described with reference to Figs. 13 to 15.

First, it is judged whether or not the I, P and B pictures are fetched based on the thinning interval notified on the side of the server at the above step S112 of Fig. 4 or when the MPEG data is opened (step S171). When it is judged that the pictures are fetched, the picture checking is completed after IPB picture checking is performed (step S172). When it is judged that the pictures are not fetched, it is judged whether the I and P pictures are fetched (step S173). When it is judged that the pictures are fetched, the picture checking is completed after IP picture checking is performed (step S174). When it is judged that the pictures are not fetched, it is judged whether the I picture is fetched (step S175). When it is judged that the picture is fetched, the picture checking is completed after I picture checking is performed (step S176). When it is judged that the picture is not fetched, the picture checking is completed.

I Picture Checking (Step S176)

In the I picture checking, a part or the whole of the I picture is extracted from the MPEG data, and data with P picture and B picture deleted therefrom is generated.

Details will be described using Fig. 13.

First, pts, dts and an I picture flag are checked (step S181). The I picture flag is a flag indicating whether or not the data pointed by a pointer at present is in I picture data, the data is in the I picture when the flag is ON, and the data is not in the I picture when the flag is OFF. The pointer herein is a known file pointer and used for having access to the MPEG data stored in the server buffer 7.

Subsequently, it is judged whether the position pointed by the pointer at present in the data of the server buffer 7 is in the I picture, i.e., whether or not the I picture flag is ON (step S182). When it is in the I picture, the data from the position pointed by the pointer to the end of the packet is copied from the server buffer 7 to the LBR buffer 8 (step S190), and the I picture checking (step S176) is completed (step S191).

On the other hand, when the position is not in the I picture, the top of the I picture is retrieved from the position pointed by the pointer at present toward the end of the packet (step S183). When the top of the I picture is not found, the I picture checking is completed (step S191).

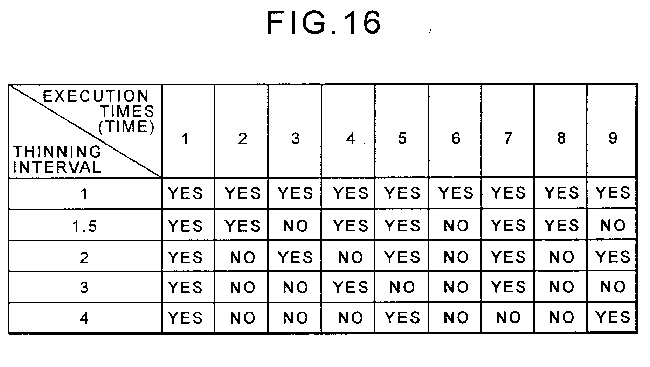

When the top of the I picture is found, it is judged based on the thinning interval whether the found picture is fetched (step S184). The thinning interval is an interval notified by the client 9. For example, judgment is made as shown in Fig. 16. Fig. 16 illustrates an example of a table showing judgment of the step S184 and the like for the interval designating data of the thinning interval. In a case where the interval designating data of the designated thinning interval is "2", when the step S184 is executed for the first time, it is judged to be Yes, the process advances to step S185, and the picture is fetched. When the process passes step S189 and the like and returns to the step S184, i.e., when the step is executed for the second time, it is judged to be No, the process advances to the step S189, and no picture is fetched. Thereafter, in the same manner, it is judged to be Yes for the third time, and No for the fourth time. In another thinning interval, judgment is made in the same manner as shown in Fig. 16.

When it is judged at the step S184 that the I picture is fetched, i.e., when it is judged to be Yes, the process advances to the step S185 to turn on the I picture flag.

Subsequently, the end of the I picture is retrieved from the pointer position toward the end of the packet (step S186). When there is no end to the terminal end of the packet, it is judged that all the data is of the I picture, the data from the pointer position before the retrieval of the step S186 to the terminal end of the packet is copied from the server buffer 7 to the LBR buffer 8 (step S187), and the I picture checking (step S176) is completed (step S191).

On the other hand, when the end of the I picture is found at the step S186, the picture flag turned on at the step S185 is turned off, and the data from the pointer position before the retrieval of the step S186 to the found end of the I picture is copied from the server buffer 7 to the LBR buffer 8 (step S188).

Subsequently, it is checked to the end of the packet whether the checking is completed (step S189). When the checking is completed to the end, the I picture checking (step S176) is completed (step S191). When the checking to the end of the packet is not completed, the process returns to the step S183, and the above processing is repeated (step S189).

Additionally, in the aforementioned processing, when the data is copied from the server buffer 7 to the LBR buffer 8, the pointer pointing the packet data in the server buffer 7 is advanced by the copied data. Moreover, when retrieval is performed, the pointer also moves to the retrieved position.

IP Picture Checking

In the IP picture checking, a part or the whole of the I and P pictures is extracted from the MPEG data, and data with B picture deleted therefrom is generated.

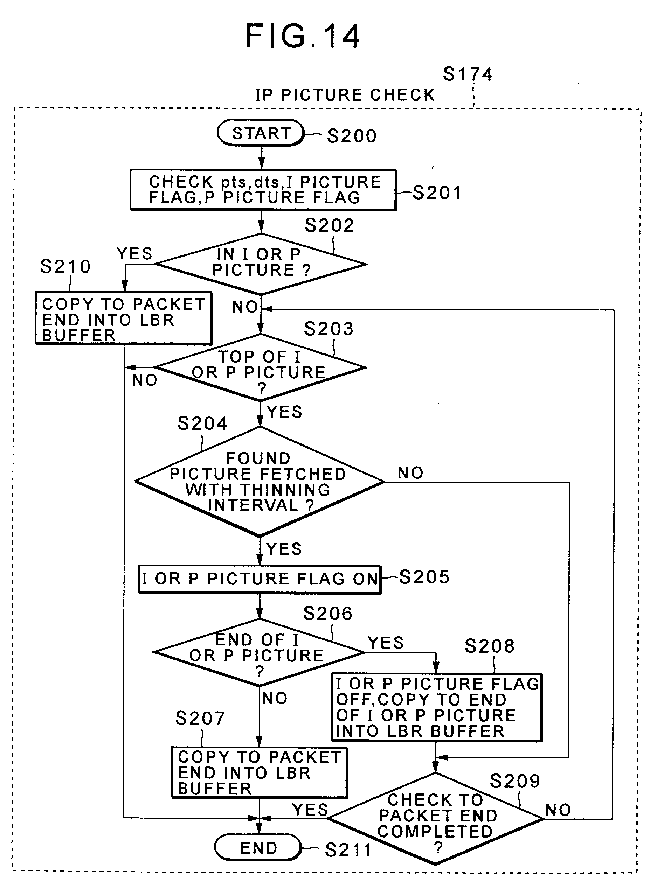

Details will be described using Fig. 14. The IP picture checking is basically the same as the I picture checking (step S176) shown in Fig. 13 except in that the data to be extracted are I and P pictures.

First, pts, dts, an I picture flag and a P picture flag are checked (step S201). The P picture flag is a flag indicating whether or not the data pointed by a pointer at present is in P picture data, the data is in the P picture when the flag is ON, and the data is not in the P picture when the flag is OFF.

Subsequently, it is judged whether or not the position pointed by the pointer at present in the data of the server buffer 7 is in the I or P picture, i.e., whether or not the I or P picture flag is ON (step S202). When the position is in the I or P picture, the data from the position pointed by the pointer to the end of the packet is copied from the server buffer 7 to the LBR buffer 8 (step S210), and the IP picture checking (step S174) is completed (step S211).

On the other hand, when the position is not in the I or P picture, the top of the I or P picture is retrieved from the present position toward the end of the packet (step S203). When the top of the I or P picture is not found, the IP picture checking is completed (step S211).

When the top of the I or P picture is found, it is judged based on the thinning interval whether the found picture is fetched (step S204). The thinning interval is an interval notified by the client 3 concerning each of the I picture and the P picture. For example, judgment is made as shown in Fig. 16. When the top of the I picture is found at the step S203, the judgment shown in Fig. 16 is made with the thinning interval designated for the I picture. On the other hand, when the top of the P picture is found at the step S203, the judgment shown in Fig. 16 is made with the thinning interval designated for the P picture.

When it is judged at the step SS04 that the picture is fetched, i.e., when it is judged to be Yes, the process advances to the step S205 to turn on the I picture flag or the P picture flag in accordance with the picture top found at the step S203.

Subsequently, the end of the I or P picture is retrieved from the pointer position toward the end of the packet (step S206). When there is no end to the terminal end of the packet, it is judged that all the data is I or P picture, the data from the pointer position before the retrieval of the step S206 to the terminal end of the packet is copied from the server buffer 7 to the LBR buffer 8 (step S207), and the IP picture checking (step S174) is completed (step S211).

On the other hand, when the end of the I or P picture is found at the step S206, the picture flag turned on at the step S205 is turned off, and the data from the pointer position before the retrieval of the step S206 to the found end of the I or P picture is copied from the server buffer 7 to the LBR buffer 8 (step S208).

Subsequently, it is checked to the end of the packet whether the checking is completed (step S209). When the checking is completed to the end, the IP picture checking (step S174) is completed (step S211). When the checking to the end of the packet is not completed yet, the process returns to the step S203, and the above processing is repeated (step S209).

Additionally, in the aforementioned processing, when the data is copied from the server buffer 7 to the LBR buffer 8, the pointer pointing the packet data in the server buffer 7 is advanced by the copied data. Moreover, when retrieval is performed, the pointer also moves to the retrieved position.

IPB Picture Checking

In the IPB picture checking, a part or the whole of the I, P and B pictures is extracted from the MPEG data to generate data.

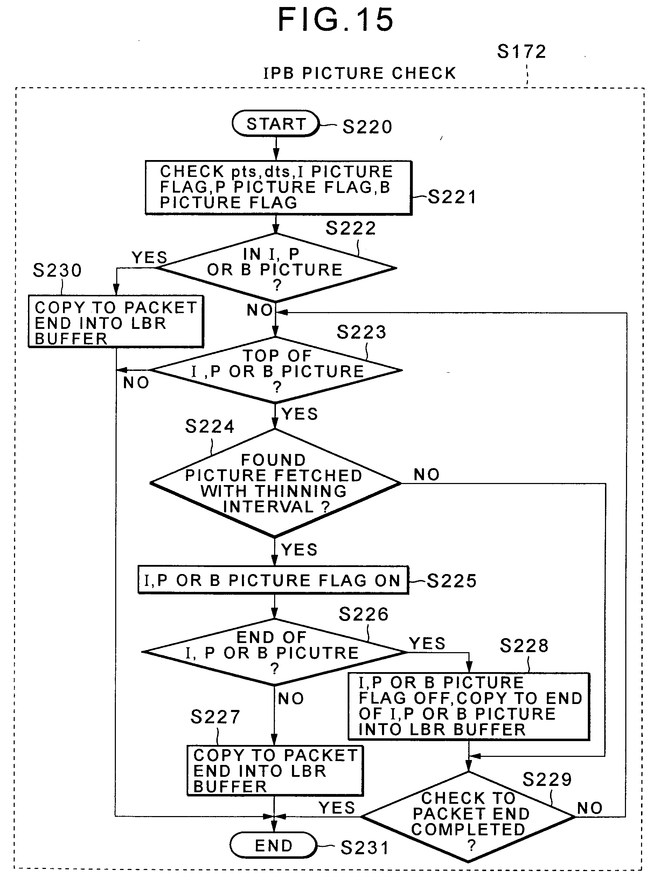

Details will be described using Fig. 15. The IPB picture checking is basically the same as the I picture checking (step S176) shown in Fig. 13 except in that the data to be extracted are I, P and B pictures.

First, pts, dts, an I picture flag, a P picture flag and a B picture flag are checked (step S221). The B picture flag is a flag indicating whether or not the data pointed by a pointer at present is in B picture data, the data is in the B picture when the flag is ON, and it is not in the B picture when the flag is OFF.

Subsequently, it is judged whether or not the position pointed by the pointer at present in the data of the server buffer 7 is in the I, P or B picture, i.e., whether or not the I, P or B picture flag is ON (step S222). When the position is in the I, P or B picture, the data from the position pointed by the pointer to the end of the packet is copied from the server buffer 7 to the LBR buffer 8 (step S230), and the IPB picture checking (step S172) is completed (step S231).

On the other hand, when the position is not in the I, P or B picture, the top of the I, P or B picture is retrieved from the present position toward the end of the packet (step S223). When the top of the I, P or B picture is not found, the IPB picture checking is completed (step S231).

When the top of the I, P or B picture is found, it is judged based on the thinning interval whether the found picture is fetched (step S224). The thinning interval is an interval notified by the client 3 concerning each of the I, P and B pictures. For example, judgment is made as shown in Fig. 16. When the top of the I picture is found at the step S223, the judgment shown in Fig. 16 is made with the thinning interval designated for the I picture. On the other hand, when the top of the P picture is found at the step S223, the judgment shown in Fig. 16 is made with the thinning interval designated for the P picture. When the top of the B picture is found, the judgment shown in Fig. 16 is made with the thinning interval designated for the B picture.

When it is judged at the step S224 that the picture is fetched, i.e., when it is judged to be Yes, the process advances to the step S225 to turn on the I, P or B picture flag in accordance with the picture top found at the step S223.

Subsequently, the end of the I, P or B picture is retrieved from the pointer position toward the end of the packet (step S226). When there is no end to the terminal end of the packet, it is judged that all the data is I, P or B picture, the data from the pointer position before the retrieval of the step S226 to the terminal end of the packet is copied from the server buffer 7 to the LBR buffer 8 (step S227), and the IPB picture checking (step S172) is completed (step S231).

On the other hand, when the end of the I, P or B picture is found at the step S226, the picture flag turned on at the step S225 is turned off, and the data from the pointer position before the retrieval of the step S226 to the found end of the I, P or B picture is copied from the server buffer 7 to the LBR buffer 8 (step S228).

Subsequently, it is checked to the end of the packet whether the checking is completed (step S229). When the checking is completed to the end, the IPB picture checking (step S172) is completed (step S231). When the checking to the end of the packet is not completed yet, the process returns to the step S223, and the above processing is repeated (step S229).

Additionally, in the aforementioned processing, when the data is copied from the server buffer 7 to the LBR buffer 8, the pointer pointing the packet data in the server buffer 7 is advanced by the copied data. Moreover, when retrieval is performed, the pointer also moves to the retrieved position.

According to the first embodiment, as shown in Fig. 20, since transmission/receipt of high-quality full data (steps S271 to S273) and transmission/receipt of LBR data with less data amount (steps S274 to S277) are switched in accordance with the load condition of the network 4 or the CPU, the MPEG data can be distributed in real time even in a strict load condition.

Especially, since the frame data is transmitted at the predetermined interval by thinning the MPEG data, a phenomenon is inhibited in which the full data in a certain time is generated in a concentrated manner, the network load is so high that the video data cannot be transmitted, the transmission of the MPEG data is behind video playback time and, consequently, the MPEG data in another time cannot be played back.

Moreover, in a case where the load of the client 9 is so high that a sufficient CPU time cannot be allotted for video playback, frame dropping occurs even if the full data is transmitted. According to the embodiment, since the CPU load of the video playback device is measured to perform the LBR processing in accordance with the CPU load, in the above case the LBR data having the data amount decreased is transmitted, and the network load can be alleviated.

In the first embodiment, the MPEG data has been described as the video data, but even another video data can have the data amount to be transmitted adjusted by appropriately thinning the inter-frame compressed frames or the intra-frame compressed frames and the inter-frame compressed frames to perform the LBR processing as long as the data has the intra-frame compressed frames and the inter-frame compressed frames.

The intra-frame compressed frame data herein is frame data compressed based on the data in the frame itself, and the inter-frame compressed frame data is frame data compressed based on a difference from another frame.

SECOND EMBODIMENT

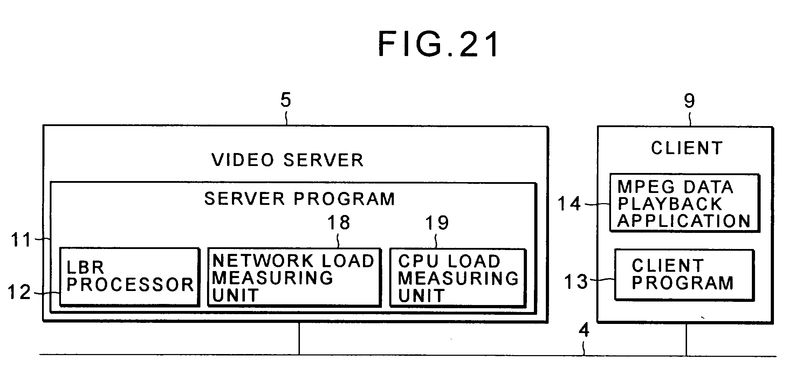

Fig. 1 shows a system construction in a second embodiment of the invention. Fig. 21 shows the MPEG data of the video server 5 and the client 9, and S/V construction of the distribution/playback section of the LBR data. In Fig. 21, the same reference numerals as in Fig. 2 designate the same or equivalent sections, and the network load measuring unit 18 and the CPU load measuring unit 19 are not in the client program 13 but in the server program 11.

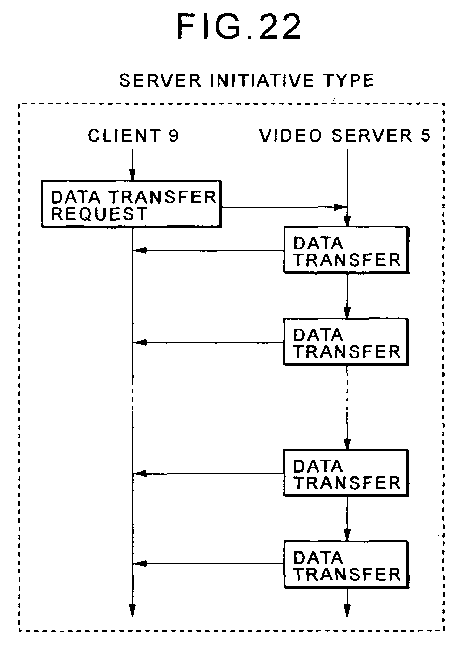

The second embodiment is a system operated in a server initiative type. In the server initiative type, the full data or the LBR data is generated and distributed in real time by the video server 5 in response to the data transfer request from the client 9. As shown in Fig. 22, the data transfer request from the client 9 is used as a trigger to start distribution. Subsequently, the video server 5 takes the information from the network load measuring unit 18 and the CPU load measuring unit 19 into consideration, and the appropriate amount of data continues to be distributed to the client on the side of the video server 5. The client 9 receives and plays back the sent data. Additionally, the server initiative type can be switched to the client initiative type halfway.

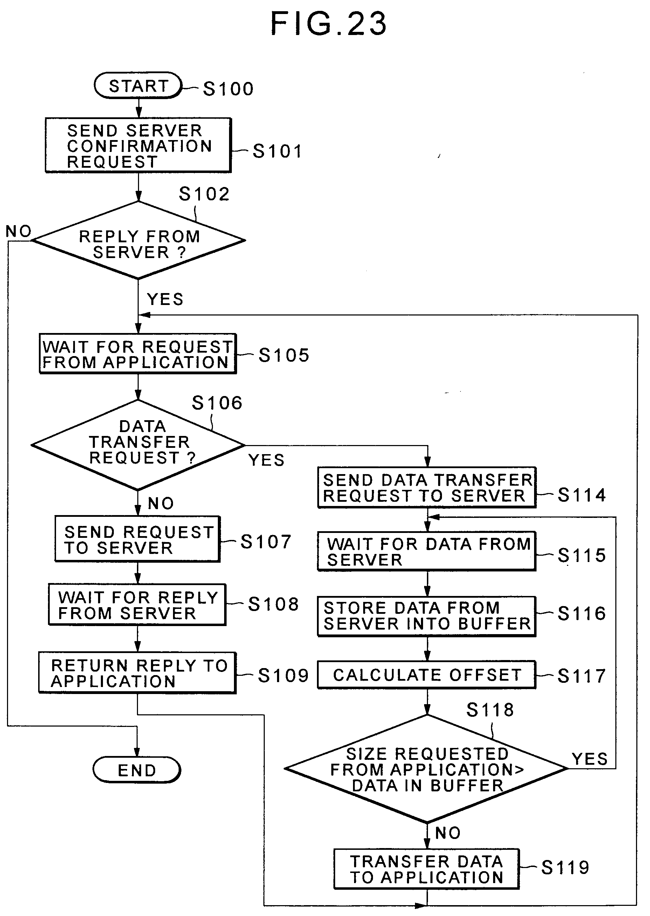

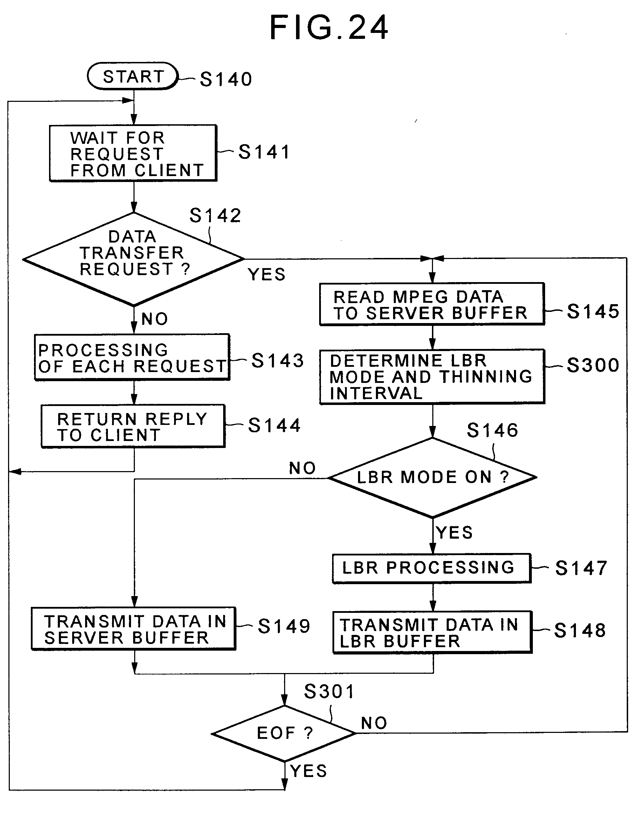

The system of the second embodiment is constructed as aforementioned. The distribution/playback of the full data or the LBR data will be described in detail based on processing flowcharts of Figs. 24 and 23 of a server program and a client program. Additionally, in Fig. 23 the same reference numerals as those in Fig. 4 designate the same or equivalent sections, and in Fig. 24 the same reference numerals as those in Fig. 10 designate the same or equivalent sections.

In the processing flowcharts of Figs. 23 and 24, first the MPEG data playback application 14 transmits the data transfer request (step S114 of Fig. 23). The request is transferred from the client program 13 via the network 4 to the server program 11.

The server program 11 activates the network load measuring unit 18 and the CPU load measuring unit 19 in independent processes when the program is started, and constantly measures the network load and the CPU load.

Upon receiving an LBR start request (steps S141 and S142 of Fig. 24), the server program 11 reads the MPEG data from the disc device 6 to the server buffer 7 to generate the LBR data (step S145).

Subsequently, the server program 11 determines the LBR mode based on the network load and the CPU load measured by the network load measuring unit 18 and the CPU load measuring unit 19. The determining method is the same as the method described in the first embodiment.

Subsequently, it is judged based on a determination result of step S300 whether the LBR processing is performed (step S146), and the LBR processing is performed at step S147 when it is judged to be performed. The LBR processing is performed in the same method as in the first embodiment.

Subsequently, the server program 11 distributes the full data or the LBR data generated by the LBR buffer 8 to the client program 13 (step S148 or S149).

Subsequently, it is judged whether transmission is completed to the terminal end of the file (EOF) of the MPEG data designated from the client 9 by the data transfer request (step S301). When the transmission is completed, the process returns to the step S141 and waits for the next request from the client 9. When the transmission to the terminal end of the file is not completed, the process returns to the step S145 to transmit the next MPEG data.

By repeating the aforementioned, the server program 11 of the second embodiment continues to distribute the LBR data. On the other hand, the client program 13 receives the sent LBR data (step S115 of Fig. 23), stores the data in the client buffer 10 (step S116), and transfers the full data or the LBR having the size requested by the MPEG data playback application 14 to the MPEG data playback application (step S119). The MPEG data playback application 14 plays back the data.

By repeating the aforementioned, the MPEG data is played back.

Since the amount of the MPEG data to be transferred is automatically adjusted in accordance with the network and CPU load conditions before distribution also in the second embodiment, the video data can be played back in real time.

Additionally, in the second embodiment, the MPEG data has been described as the video data, but even another video data can have the data amount to be transferred adjusted by appropriately thinning the inter-frame compressed frames or the intra-frame compressed frames and the inter-frame compressed frames to perform the LBR processing as long as the data has the intra-frame compressed frames and the inter-frame compressed frames.

THIRD EMBODIMENT

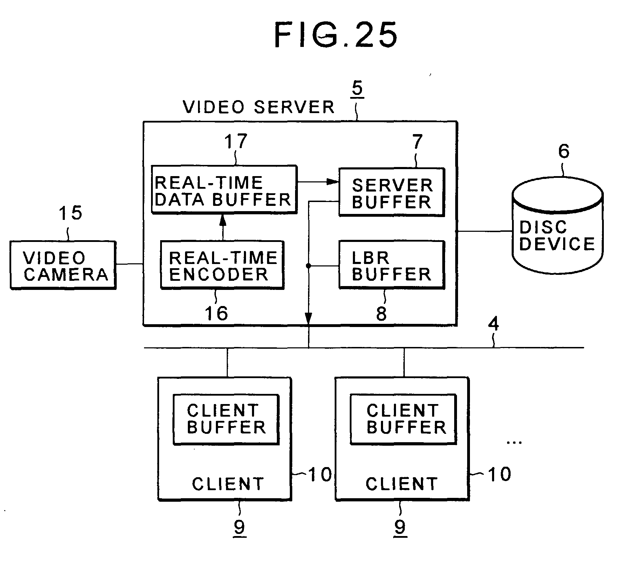

Fig. 25 shows a system construction in a third embodiment of the invention.

In Fig. 25, the same reference numerals as those in Fig. 1 show the same or equivalent sections. Numeral 15 denotes a video camera, 16 denotes a real-time encoder for receiving a video signal from the video camera 15 to encode the signal into the MPEG data in real time, and 17 denotes a real-time data buffer for storing the MPEG data encoded by the real-time encoder.

Moreover, as not shown, the video server 5 has a parameter memory buffer for storing various parameters of the MPEG data used for playing back the MPEG data during multi-casting, for example, a frame rate and the like.

Fig. 2 shows a S/W construction of an LBR data distribution/playback section of the video server 5 and the client 9 in the embodiment.

In the embodiment the LBR data generated by subjecting the MPEG data encoded in real time to the LBR processing on the video server 5 in real time or the LBR data generated from the usual MPEG data stored in the disc device 6 of the first embodiment is distributed to the clients 9 in a multi-cast mode (hereinafter referred to as the multi-cast LBR distribution). Here, in the third embodiment the client initiative type operation is performed in the same manner as in the first embodiment. Additionally, the client initiative type can be switched to the server initiative type described in the second embodiment.

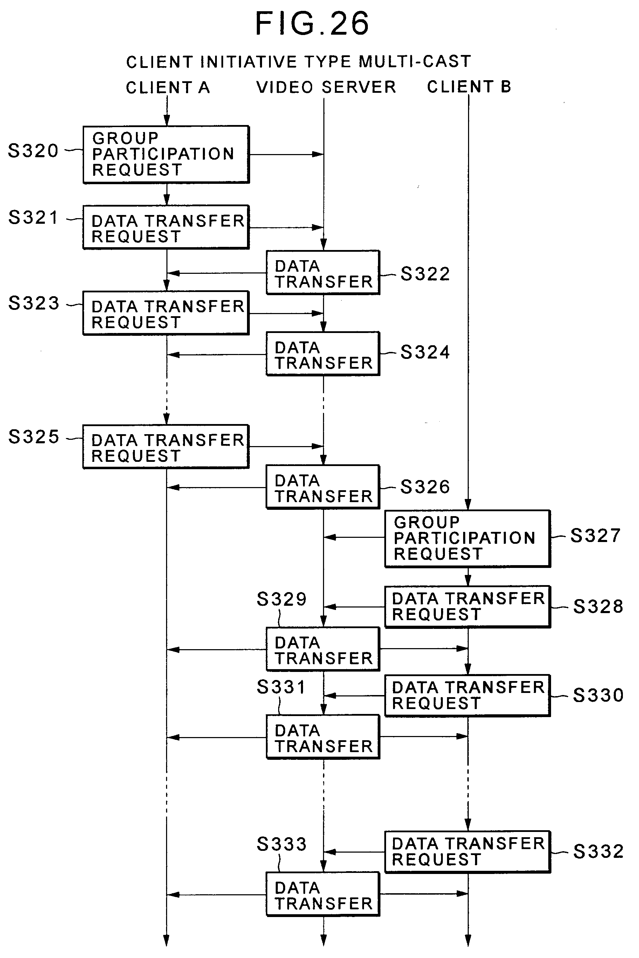

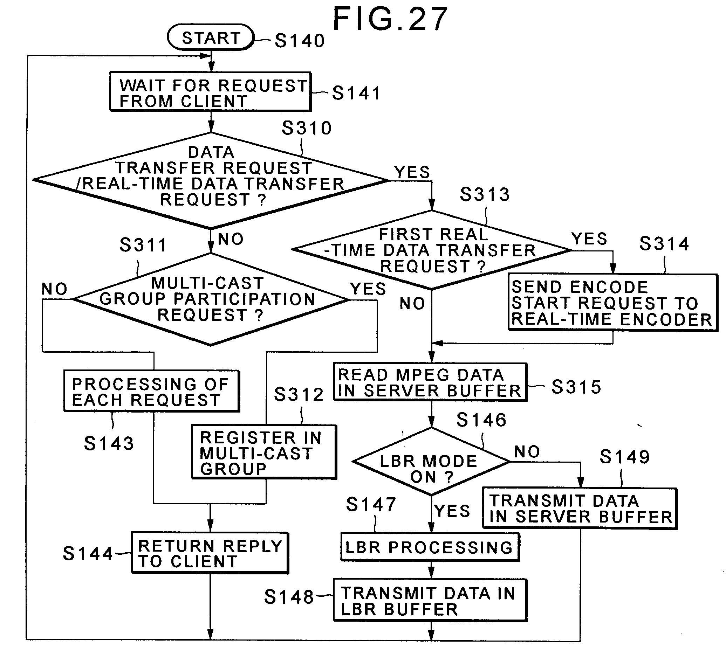

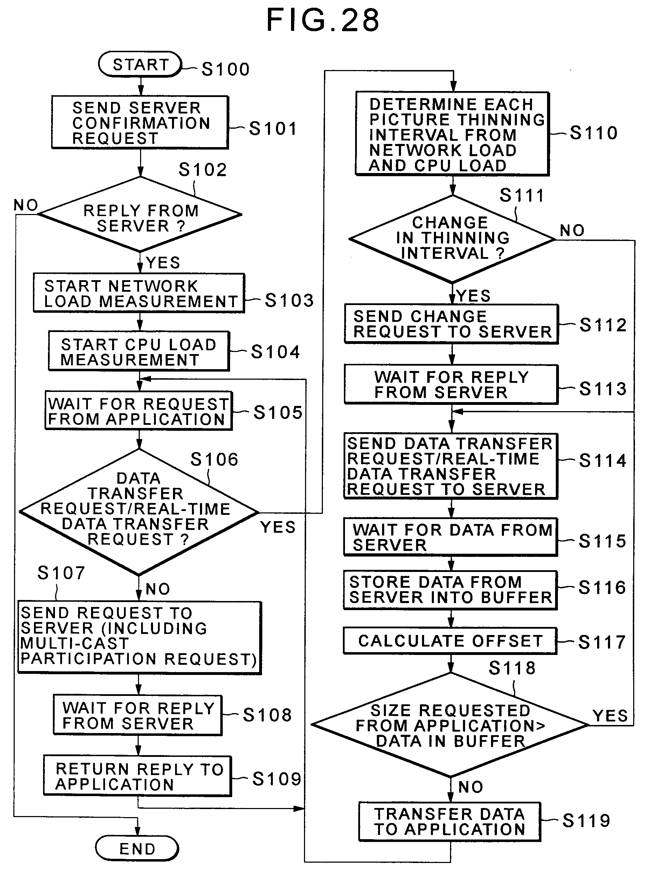

The system of the third embodiment is constructed as aforementioned, and details will be described based on a sequence diagram of Fig. 26 and processing flowcharts of Figs. 27 and 28 of a server program and a client program.

In Fig. 27 the same reference numerals as those in Fig. 10 designate the same or equivalent sections, and in Fig. 28 the same reference numerals as those in Fig. 4 designate the same or equivalent sections. Fig. 26 is the sequence diagram showing the distribution by the multi-cast mode for transferring data, and shows that the video server 5 simultaneously transfers data to two clients 9.

First, operation on the side of the client 9 will be described. The MPEG data playback application 14 designates the multi-cast mode and sends an OPEN request. Upon receiving the OPEN request, the client program 13 transmits a multi-cast group participation request via the network 4 to the video server 5 (step S107 of Fig. 28, step S320 of Fig. 26). The multi-cast group participation request is a request having a role of the OPEN request in the first embodiment and a role of requesting for participation into the multi-cast group.

Subsequently, the client program 13 performs the processing of steps S108 to S113, and transmits a data transfer request or a real-time data transfer request based on an instruction of the MPEG data playback application 14 (step S114 of Fig. 28, step S321 of Fig. 26).

Subsequently, the client program operates in the same manner as in the first embodiment to play back the MPEG data transmitted from the video server 5.

Operation on the side of the video server 5 will be described using Fig. 27.

Upon receiving the request from the client 9 at the step S141, the server program 11 judges whether the received request is the data transfer request or the real-time data transfer request (step S310).

When it is not the data transfer request or the real-time data transfer request, it is judged whether or not the received request is a multi-cast group participation request (step S311 of Fig. 27). When it is the multi-cast group participation request, the server program 11 registers the client 9 having transmitted the multi-cast group participation request into the multi-cast group (step S312), and returns a reply including ID information of the registered multi-cast group (step S144). When it is not the multi-cast group participation request, the process advances to step S143, and the processing as described in the first embodiment is performed.

On the other hand, when it is judged at the step S310 that the received request is the data transfer request or the real-time data transfer request, it is judged whether the received request is a first real-time data transfer request (step S313). When it is the first real-time data transfer request, a start request is outputted to the real-time encoder 16 (step S314). Upon receiving the start request, the real-time encoder 16 starts encoding a video signal received from the video camera 15. Specifically, the real-time encoder 16 receives video being photographed by the video camera 15, encodes the MPEG data in real time, and simultaneously writes the MPEG data onto the disc device 6 and the real-time data buffer 7. Here the multi-casting using the MPEG data written on the disc device 6 can also be realized. The real-time encoder 16 continues to perform the real-time encoding afterwards until a stop request is sent from the server program 11.

Immediately after sending the real-time encoding start request, the server program 11 stores the MPEG data sent from the real-time encoder 16 in the parameter memory buffer. The buffer is used for storing various MPEG data parameters, e.g., the frame rate and the like in such a manner that the client connected during the multi-cast distribution can generate the MPEG data from halfway.

Subsequently, the MPEG data is read in the server buffer 7 (step S315). When the MPEG data is read, the source from which the MPEG data is read differs depending on the data transfer request or the real-time data transfer request, and in case of the data transfer request the MPEG data is read from the disc device 6 as described in the step S145 of Fig. 10. In case of the real-time data transfer request, the MPEG data is read from the real-time data buffer 17. The reading of the MPEG data from the real-time data buffer 17 is the same as the processing in the step S145 of Fig. 10 except in that the reading source is different.

Subsequently, the processing of steps S146 to S149 is performed in the same manner as in the first embodiment, and the MPEG data is distributed to the client 9. The MPEG data is distributed in the multi-cast mode to all the clients 9 registered in the multi-cast group at the step S311. Specifically, by designating ID of the multi-cast group in an output destination of data transfer packet, the packet is transmitted. Each client having received the reply transmitted at the step S144 determines whether or not the ID of its multi-cast group designated by the reply and the ID transmitted onto the network 4 coincide with each other, and receives the packet in case of coincidence.

By performing the above processing, plural clients 9 can simultaneously receive the distribution of video data. In this case, since the video data can be supplied to plural clients 9 in one transmission, the network load is effectively reduced.

Fig. 26 is a sequence diagram showing the distribution of video data by multi-casting.

First, one of the clients 9 or client A transmits a multi-cast group participation request (step S320). Upon receiving the group participation request, the video server 5 registers the client A into the multi-cast group as aforementioned. Subsequently, the client A outputs the data transfer request (step S321), and receives the video data from the video server 5 (step S322). At this time since a client B does not participate in the multi-cast group yet, the client cannot receive the data. Additionally, the data transfer request is outputted herein, but the real-time data transfer request is similarly transmitted. Subsequently, when the data transfer request is sent from the MPEG data playback application 14 and there is a sufficient empty capacity in the client buffer 10, the data transfer request is outputted again (step S323).

Subsequently, when one of the clients 9 or client B transmits the multi-cast group participation request (step S327), the video server 5 registers the client B in the multi-cast group, and returns a reply having ID information of the multi-cast group.

Thereafter, the data transfer request is outputted from the client A or B (step S330 or the like), the video server 5 distributes the video data in response to the data transfer request (step S329 or the like) and the processing is repeated. Here the distributed video data is received by the clients A and B, and the clients A and B play back the video data. The MPEG data playback application 14 or the client program 13 does not output the data transfer request when the predetermined amount of the MPEG data remains in the client buffer 10. Therefore, it is determined dependent on the amount of the MPEG data stored in the client buffer 10 which of the clients 9 transmits the data transfer request, and the client 9 whose data amount first reaches the predetermined amount or less transmits the data transfer request.

Additionally, in the third embodiment, the MPEG data has been described as the video data, but even another video data can have the data amount to be transferred adjusted by appropriately thinning the inter-frame compressed frames or the intra-frame compressed frames and the inter-frame compressed frames to perform the LBR processing as long as the data has the intra-frame compressed frames and the inter-frame compressed frames.

FOURTH EMBODIMENT

Fig. 1 shows a system construction in a fourth embodiment of the invention. The system construction is the same as in the first embodiment, but the LBR buffer 8 is used as a quick forwarding buffer. Fig. 2 shows a S/W construction of a quick forwarding data distribution/playback section of the video server 5 and the client 9, the S/W construction is the same as in the first embodiment, but the LBR processor 12 is used as a quick forwarding processor.

The fourth embodiment operates in the client initiative mode in the same manner as the first embodiment. Moreover, the quick forwarding data of the fourth embodiment is the same as the LBR data of the first embodiment in that the I picture is fetched, and different from the LBR data in that the audio packet is deleted and the values of PTS and DTS in the packet are changed for quick forwarding playback.

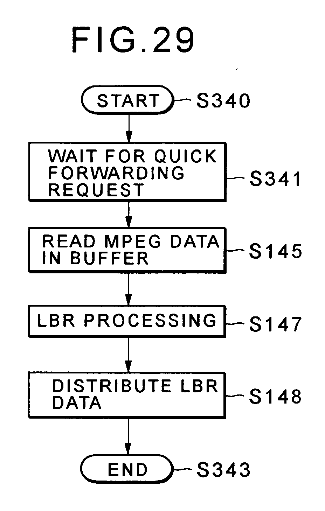

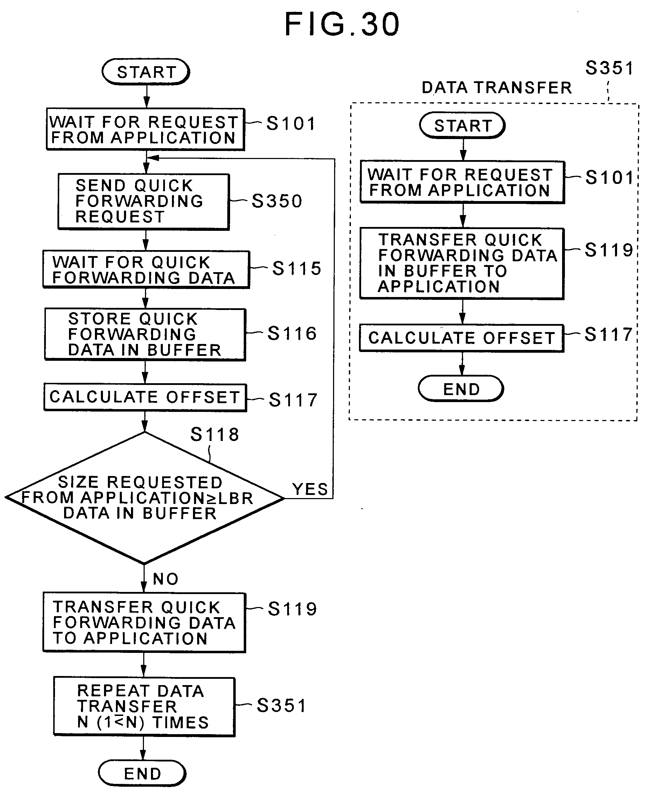

The system of the fourth embodiment is constructed as aforementioned. Quick forwarding distribution will be described in detail based on processing flowcharts of Figs. 29 and 30 of the server program 11 and the client program 13.

Fig. 29 is a flowchart showing quick forwarding data distribution process of the video server 5, and in Fig. 29 the same reference numerals as those in Fig. 10 designate the same or equivalent sections.

Fig. 30 is a flowchart showing processing of the client program 13, and in Fig. 30 the same reference numerals as those in Fig. 4 designate the same or equivalent sections.

In the processing flowcharts of Figs. 29 and 30, first the MPEG data playback application 14 sends a quick forwarding request. The quick forwarding request is sent by transmitting a packet which includes an identifier indicative of the quick forwarding request and data specifying the video data. The quick forwarding request may be sent even during playback or stoppage of video. The request is received by the client program 13 (step S101), and the client program 13 transmits the request to the video server 5 (step S350). The operation of the video server 5 will be described later.

When the quick forwarding data is sent from the video server 5 (step S115), the data is stored in the client buffer 10 (step S116), offset is calculated (step S117) and the processing of the steps S350 to S117 is repeated until the data having a size requested by the client buffer 10 is stored (step S118). When the data with the size requested by the client buffer 10 is stored, the quick forwarding data is transferred to the MPEG data playback application 14 (step S119). The quick forwarding data is MPEG data. Subsequently, the same data transfer process is repeated between the client program 13 and the server program 11.

In the data transfer process, first the quick forwarding request from the MPEG data playback application 14 is waited for (step S101), the quick forwarding data is transferred to the MPEG data playback application 14 when the data of the size requested by the client buffer 10 is stored (step S119), and the offset is calculated (step S117). The data transmitted at the step S119 in the data transferring is the same as the quick forwarding data already transmitted to the MPEG data playback application 14.

When the client program 13 transfers the quick forwarding data stored in the client buffer 10 to the playback application 14, the quick forwarding data (for one image plane) may be transferred once (usually) or the same data may be transferred plural times. By transferring the data plural times, the quick forwarding playback speed can be changed. For example, when the same data is continuously transferred twice, the playback speed becomes 1/2 of the speed when the data is transferred only once. Naturally the data flowing in the network also becomes 1/2. The quick forwarding data transferred in this manner is played back by the playback application 14.

Operation of the server program 11 will be described.

The server program 11 having received the quick forwarding request at the step S341 reads the MPEG data from the disc device 6 into the server buffer 7 to generate the quick forwarding data (step S145). Subsequently, the MPEG data is subjected to the LBR processing, and the quick forwarding data is generated in the same method as in the first embodiment (step S147). However, the following procedure is different from the LBR data generating method of the first embodiment.

•Fetching Packet other than Video Packet

When the packet is other than the video packet, the packet is not written onto the quick forwarding buffer 8.

•Changing Packet

The values of PTS and DTS in the packet are changed for quick forwarding playback.

Subsequently, the server program 11 distributes the quick forwarding data generated in the quick forwarding buffer 8 to the client 9 (step S148). By repeating the aforementioned in the server program 11, the quick forwarding data is distributed.

Especially, when the video data is displayed by the client in a quick forwarding mode, display is not degraded even if the frames to be transmitted are thinned instead of transmitting all the frame data of the video data. Specifically, in a case where 30 frames per second are played back at the time of usual playback, when double-speed playback is performed, 60 frames per second are played back according to simple calculation. However, even when the data of 30 frames per second or the data of 60 frames per second is displayed, no difference in picture quality is recognized because of human visual characteristics. For example, in the double-speed playback, 30 frames per second may be displayed. Therefore, in this case, among plural frame data in the video data, every other frame data may be extracted and transmitted as shown in Fig. 32. At this time, since the data amount transmitted by the video server is reduced, the load placed on the network can be alleviated. Quick forwarding may be requested by designating a transmission level in accordance with quick forwarding speed such as double speed and five times the speed.

By repeating the aforementioned, the quick forwarding data is distributed/played back.

Additionally, in the fourth embodiment the MPEG data has been described as the video data, but the invention can be easily applied to the video data having frames compressed through inter-frame compression.

As aforementioned, the video data distribution device of the invention is provided with the load measuring unit for measuring the load condition of the network or the video data distribution device, the data extractor for extracting the number of frame data corresponding to the measurement result of the load measuring unit from the video data including plural frame data and the transmitter for transmitting the frame data extracted by the data extractor. Therefore, the display quality of the video data is prevented from being deteriorated, while the network load can be alleviated.

Furthermore, based on the measurement result of the load measuring unit, the data extractor extracts all the frame data of the video data when the load is low, and extracts a part of the frame data of the video data when the load is high. Therefore, the display quality of the video data is prevented from being deteriorated, while the network load can be alleviated.

Moreover, by thinning the frame data among plural frame data in the video data, the number of frame data based on the measurement result of the load measuring unit is extracted. Therefore, the display quality of the video data is prevented from being deteriorated, while the network load can be alleviated.

Additionally, the data extractor extracts the video data with inter-frame compressed frame data deleted therefrom from the video data having intra-frame compressed frame data and inter-frame compressed frame data based on the measurement result of the load measuring unit, and the transmitter transmits the video data extracted by the data extractor. Therefore, the display quality of the video data is prevented from being deteriorated, while the network load can be alleviated.

Furthermore, since the video data is MPEG data, MPEG data able to be played back in real time can be provided.

Moreover, since the data extractor generates MPEG data with P picture deleted therefrom from MPEG data having I picture and P picture based on the measurement result of the load measuring unit, the video data with less image disturbance can he provided even if the video data amount is reduced.

Since the data extractor also generates MPEG data with B picture deleted therefrom from MPEG data having I picture and B picture based on the measurement result of the load measuring unit, the MPEG data able to be played back in real time can be provided.

Since the data extractor further generates MPEG data with P picture and B picture deleted therefrom from MPEG data having I picture, P picture and B picture based on the measurement result of the load measuring unit, the MPEG data able to be played back in real time can be provided.

Since the data extractor also extracts plural I pictures from MPEG data having plural I pictures at intervals corresponding to the measurement result of the load measuring unit, the MPEG data able to be played back in real time can be provided.

The device of the invention is also provided with the encoder for encoding image signals from the video camera in real time and generating video data having plural frame data and the buffer for temporarily storing the video data generated by the encoder. In the data extractor, by thinning frame data among plural frame data in the video data stored in the buffer, the number of frame data based on the measurement result of the load measuring unit is extracted from the video data. Therefore, the display quality of the video data is prevented from being deteriorated, while the network load is alleviated.

Furthermore, the video data distribution system of the invention is provided with the video data distribution device which comprises the load measuring unit for measuring the load condition of the video data distribution system, the data extractor for extracting the number of frame data corresponding to the measurement result of the load measuring unit from video data including plural frame data and the transmitter for transmitting the frame data extracted by the data extractor via the network, and the video data playback device for receiving the frame data transmitted from the transmitter of the video data distribution device via the network and playing back the received frame data. Therefore, the video data can be played back in real time.

Furthermore, since the load measuring unit measures the load of the processor for controlling operation of the video data playback device, transmission of unused frame data is inhibited, and the transmitted amount of the video data can be reduced.

Moreover, plural video data playback devices are connected to the network, and one frame data transmitted from the transmitter of the video data distribution device onto the network is received by each of the plural video data playback devices. Therefore, the video data can be transmitted to plural video data playback devices once, and the network load can be lightened.

The video data playback device also transmits the data transfer request in which data amount is designated to the video data distribution device plural times, and upon receiving the data transfer request, the video data distribution device transmits frame data based on the data size designated by the data transfer request. Therefore, the video data can be played back in real time based on the instruction of the video data playback device.

The video data playback device further transmits the data transfer request in which video data is designated, and upon receiving the data transfer request, the video data distribution device transmits plural packets having a part of frame data of the video data at predetermined intervals. Therefore, the video data can be played back in real time.

The video data distribution method of the invention comprises the transmission level determining step of determining the transmission level in accordance with the load on the video data distribution system, the data extracting step of extracting the number of frame data corresponding to the transmission level determined in the transmission level determining step from video data including plural frame data and the transmitting step of transmitting the frame data extracted in the data extracting step. Therefore, the video data can be played back in real time.

Furthermore, the transmission level determining step is performed in the video data playback device, and is provided with the load measuring step of measuring the load of the processor for controlling operation of the video data playback device, the determining step of determining the transmission level in accordance with the measurement result of the load measuring step and the transmission level transmitting step of transmitting the transmission level determined by the determining step from the video data playback device to the video data distribution device. Therefore, the video data can be played back in real time.

Furthermore, since the playback step is provided in which the video data playback device receives the frame data transmitted in the transmitting step and plays back the received frame data, the video data can be played back in real time.

Moreover, in the transmission level determining step, when the video data playback device quickly forwards and plays back the video data, the transmission level is determined in such a manner that the video data with a part of the frame data thinned from plural frame data included in the video data is extracted. When the quick forwarding playback is not performed, the transmission level is determined in such a manner that the frame data of the video data is not thinned. Therefore, the network load can further be reduced.

Additionally, in the data extracting step, when the video data playback device quickly forwards and plays back the video data including plural frame data and voice data, the voice data is deleted from the video data and the number of frame data corresponding to the transmission level is extracted to generate video data. In the transmitting step, the video data generated in the data extracting step is transmitted. Therefore, the network load can further be reduced.

INDUSTRIAL APPLICABILITY

As aforementioned, the video data distribution device, the video data distribution system and the video data distribution method of the invention are suitable for use, for example, in a video data distribution system for distributing a large amount of video data.

**Claims**

1. A video data distribution device which comprises:

   a load measuring unit for measuring a load condition of a network or the video data distribution device;
   a data extractor for extracting the number of frame data corresponding to a measurement result of said load measuring unit from video data including plural frame data; and
   a transmitter for transmitting the frame data extracted by the data extractor.

2. The video data distribution device according to claim 1 wherein based on the measurement result of the load measuring unit, the data extractor extracts all the frame data of the video data when the load is low, and extracts a part of the frame data of said video data when the load is high.

3. The video data distribution device according to claim 1 wherein the data extractor extracts the number of frame data by thinning frame data, based on the measurement result of the load measuring unit, among the plural frame data.

4. The video data distribution device according to claim 1 wherein the data extractor extracts the video data with inter-frame compressed frame data deleted therefrom from the video data having intra-frame compressed frame data and inter-frame compressed frame data based on the measurement result of the load measuring unit, and

   the transmitter transmits the video data extracted by the data extractor.

5. The video data distribution device according to claim 1 wherein the video data is MPEG data.

6. The video data distribution device according to claim 5 wherein the data extractor generates the MPEG data with P picture deleted therefrom from MPEG data having I picture and P picture in accordance with the measurement result of the load measuring unit.

7. The video data distribution device according to claim 5 wherein the data extractor generates MPEG data with B picture deleted therefrom from MPEG data having I picture and B picture in accordance with the measurement result of the load measuring unit.

8. The video data distribution device according to claim 5 wherein the data extractor generates MPEG data with P picture and B picture deleted therefrom from MPEG data having I picture, P picture and B picture in accordance with the measurement result of the load measuring unit.

9. The video data distribution device according to claim 5 wherein the data extractor extracts plural I pictures from MPEG data having plural I pictures at intervals corresponding to the measurement result of the load measuring unit.

10. The video data distribution device according to claim 1 which comprises:

    an encoder for encoding image signals from a video camera in real time and generating video data having plural frame data; and
    a buffer for temporarily storing the video data generated by the encoder, wherein
    by thinning frame data among plural frame data in the video data stored in said buffer, the data extractor extracts the number of frame data based on the measurement result of the load measuring unit from said video data.

11. A video data distribution system which comprises:

    a video data distribution device comprising a load measuring unit for measuring a load condition of the video data distribution system, a data extractor for extracting the number of frame data corresponding to a measurement result of said load measuring unit from video data including plural frame data and a transmitter for transmitting the frame data extracted by the data extractor via a network; and
    a video data playback device for receiving the frame data transmitted from the transmitter of said video data distribution device via said network and playing back the received frame data.

**12.** The video data distribution system according to claim 11 wherein the load measuring unit measures a load of a processor for controlling operation of the video data playback device.

**13.** The video data distribution system according to claim 12 wherein plural video data playback devices are connected to the network, and

one frame data transmitted from the transmitter of the video data distribution device onto said network is received by each of said plural video data playback devices.

**14.** The video data distribution system according to claim 11 wherein the video data playback device transmits a data transfer request in which data amount is designated to the video data distribution device plural times, and

upon receiving said data transfer request plural times, the video data distribution device transmits frame data based on the data amount designated by each data transfer request for said each data transfer request.

**15.** The video data distribution system according to claim 12 wherein the video data playback device transmits a data transfer request in which video data is designated, and

upon receiving said data transfer request, the video data distribution device transmits plural packets having a part of frame data of said video data at predetermined intervals.

**16.** A video data distribution method which comprises:

a transmission level determining step of determining a transmission level in accordance with a load of a video data distribution system;
a data extracting step of extracting the number of frame data corresponding to the transmission level determined by said transmission level determining step from video data including plural frame data; and
a transmitting step of transmitting the frame data extracted by said data extracting step.

**17.** The video data distribution method according to claim 16 wherein the transmission level determining step is performed in a video data playback device, and comprises

(a) a load measuring step of measuring a load of a processor for controlling operation of the video data playback device,
(b) a determining step of determining a transmission level in accordance with a measurement result of the load measuring step, and
(c) a transmission level transmitting step of transmitting the transmission level determined by the determining step from the video data playback device to the video data distribution device.

**18.** The video data distribution method according to claim 16 which comprises a playback step in which the video data playback device receives the frame data transmitted by the transmitting step and plays back the received frame data.

**19.** The video data distribution method according to claim 16 wherein in the transmission level determining step, when the video data playback device plays back the video data with fast speed, the transmission level is determined in such a manner that the video data with a part of frame data thinned from plural frame data included in the video data is extracted, and when fast playback is not performed, the transmission level is determined in such a manner that the frame data of the video data is not thinned.

**20.** The video data distribution method according to claim 16 wherein in the data extracting step, when the video data playback device quickly forwards and plays back the video data including plural frame data and voice data, said voice data is deleted from the video data and the number of frame data corresponding to the transmission level is extracted to generate video data, and

in the transmitting step, the video data generated by said data extracting step is transmitted.

# FIG. 1

# FIG.2

5

## VIDEO SERVER

11 ― SERVER PROGRAM

12 ― LBR PROCESSOR

9

## CLIENT

14 ― MPEG DATA PLAYBACK APPLICATION

13 ― CLIENT PROGRAM

18 ― NETWORK LOAD MEASURING UNIT

CPU LOAD MEASURING UNIT ― 19

4

# FIG.3

## CLIENT INITIATIVE TYPE

CLIENT 9      VIDEO SERVER 5

DATA TRANSFER REQUEST

DATA TRANSFER

DATA TRANSFER REQUEST

DATA TRANSFER

DATA TRANSFER REQUEST

DATA TRANSFER

DATA TRANSFER REQUEST

DATA TRANSFER

# FIG.4

START — S100

SEND SERVER CONFIRMATION REQUEST — S101

S102
REPLY FROM SERVER ?
NO
YES

START NETWORK LOAD MEASUREMENT — S103

START CPU LOAD MEASUREMENT — S104

WAIT FOR REQUEST FROM APPLICATION — S105

S106
DATA TRANSFER REQUEST ?
YES
NO

SEND REQUEST TO SERVER — S107

WAIT FOR REPLY FROM SERVER — S108

RETURN REPLY TO APPLICATION — S109

END

DETERMINE EACH PICTURE THINNING INTERVAL FROM NETWORK LOAD AND CPU LOAD — S110

S111
CHANGE IN THINNING INTERVAL ?
NO
YES

SEND CHANGE REQUEST TO SERVER — S112

WAIT FOR REPLY FROM SERVER — S113

SEND DATA TRANSFER REQUEST TO SERVER — S114

WAIT FOR DATA FROM SERVER — S115

STORE DATA FROM SERVER INTO BUFFER — S116

CALCULATE OFFSET — S117

S118
SIZE REQUESTED FROM APPLICATION> DATA IN BUFFER
YES
NO

TRANSFER DATA TO APPLICATION — S119

# FIG.5

| ID OF OPEN REQUEST |
|---|
| PORT NUMBER |
| LBR MODE |
| MULTI-CAST MODE |
| LENGTH OF FILE NAME |
| FILE NAME |

# FIG.6

| ID OF READ REQUEST |
|---|
| PORT NUMBER |
| OFFSET |
| SIZE |

# FIG.7

CPU LOAD MEASUREMENT

( START )—S120

PRESENT TIME->T1 —S121

EXECUTE LOW
PRIORITY PROCESSING —S122

TIME FOR LOW PRIORITY
PROCESSING->T2 —S123

PRESENT TIME ->T3 —S124

CPU OPERATION
RATIO=100-(T2/(T3-T1)X100) —S125

( END )—S126

# FIG.8

NETWORK LOAD MEASUREMENT

( START )—S130

PRESENT TIME->T1 —S131

SEND CONSTANT-SIZE
DATA TO UNUSED PORT
OF SERVER —S132

PRESENT TIME->T2 —S133

COMPARE WITH THRESHOLD
USING INDEX
((TRANSFERRED DATA SIZE)
/(T2-T1)/NETWORK BAND) —S134

( END )—S135

# FIG.9

| OFFSET | 0 | 10 | 20 | 30 | 40 | 50 | 60 | 70 |
|---|---|---|---|---|---|---|---|---|
| APPLICATION TIME | T0 | T1 | T2 | T3 | T4 | T5 | T6 | T7 |

DATA REQUESTED BY APPLICATION

DATA RECEIVED BY APPLICATION

DATA SENT TO CLIENT

LBR DATA

DATA IN DISC

| CLAVIUS TIME | T0 | T1 | T2 | | T3 | | T4 | T5 |

EP 0 901 285 A1

# FIG.10

START — S140

WAIT FOR REQUEST FROM CLIENT — S141

DATA TRANSFER REQUEST ? — S142

NO

PERFORM PROCESSING OF EACH REQUEST — S143

RETURN REPLY TO CLIENT — S144

YES

READ MPEG DATA INTO SERVER BUFFER — S145

S146

NO ⟵ LBR MODE ON ?

YES

LBR PROCESSING — S147

TRANSMIT DATA IN SERVER BUFFER — S149

TRANSMIT DATA IN LBR BUFFER — S148

# FIG.11

S147

LBR PROCESSING

```
START  ── S150

        S151
   PACK HEADER
   POSITION DEFINED ──YES──→
        ?
        │NO

   SEARCH FOR PACK ── S152
   HEADER

S153 ─ COPY BUFFER HEAD
       TO LBR BUFFER

           S154
NO    SYSTEM HEADER
   ┌──────    ?
   │          │YES
S155
   COPY SYSTEM HEADER
   TO LBR BUFFER

              S156
YES    VIDEO PACKET
  ┌──────    ?
  │          │NO
PICTURE ─ S157
CHECK
      COPY TO PACKET
      END INTO LBR ── S158
      BUFFER
```

```
              S159
   PACK HEADER ──NO──→
       ?
       │YES    S160
   COPY PACK HEADER
   INTO LBR BUFFER

              S161
   SYSTEM HEADER ──NO──→
       ?
       │YES    S162
   COPY SYSTEM
   HEADER INTO LBR
   BUFFER

              S163
   VIDEO PACKET ──YES──→
       ?
       │NO  S165      PICTURE
S164                  CHECK
   COPY TO PACKET END
   INTO LBR PACKET

   REPEAT UNTIL DATA
   IN BUFFER ENDS ── S166

   WRITE LBR HEADER
   INTO LBR BUFFER

S167        END ── S168
```

# FIG.12

PICTURE CHECK — S157,S165

# FIG.13

S176

I PICTURE CHECK

```
        ( START )── S180
              │
              ▼
   ┌──────────────────┐
   │ CHECK pts,dts,I   │── S181
   │ PICTURE FLAG      │
   └──────────────────┘
              │
              ▼        S182
        YES  ◇ IN I PICTURE ? ◇
   S190  ◄───┘          │
   ┌──────────────┐    NO
   │ COPY TO PACKET│    │◄──────────────────┐
   │ END INTO LBR  │    │      S183          │
   │ BUFFER        │    ▼                    │
   └──────────────┘  ◇ TOP OF I ◇           │
         │    NO ◄──◇  PICTURE ? ◇          │
         │            │                      │
         │           YES                     │
    S184 │            ▼                       │
         │   ◇ FOUND                          │
         │   ◇ PICTURE FETCHED ◇── NO ──┐    │
         │   ◇ WITH THINNING ◇          │    │
         │   ◇ INTERVAL ?  ◇            │    │
         │            │                  │    │
         │           YES                 │    │
         │            ▼                   │    │
         │   ┌──────────────────┐        │    │
         │   │ I PICTURE FLAG ON │── S185 │    │
         │   └──────────────────┘        │    │
         │            │   S186           │    │
         │            ▼                   │    │
         │     ◇ END OF I ◇── YES ──┐    │    │
         │     ◇ PICTURE ? ◇   S188  │    │    │
         │            │         ┌────▼──────────┐
         │           NO         │ I PICTURE FLAG OFF,│
         │    S187   │          │ COPY TO END OF I   │
         │           ▼          │ PICTURE INTO LBR   │
         │  ┌──────────────┐    │ BUFFER             │
         │  │ COPY TO PACKET│   └───────┬───────────┘
         │  │ END INTO LBR  │           │             │
         │  │ BUFFER        │           │    S189      │
         │  └──────────────┘            ▼              │
         │         │   YES     ◇ CHECK TO ◇── NO ──────┘
         └─────────┴──◄────────◇ PACKET END ◇
                    │          ◇ COMPLETED ◇
              ( END )── S191   ◇     ?    ◇
```

# FIG.14

S174

IP PICTURE CHECK

```
          ( START )──S200
               │
               ▼
   ┌──────────────────────┐
   │ CHECK pts,dts,I PICTURE │──S201
   │ FLAG,P PICTURE FLAG    │
   └──────────────────────┘
               │
               ▼          S202
         ╱───────────╲
  YES   ╱  IN I OR P   ╲
 ◄──────    PICTURE ?    
 S210    ╲             ╱
         ╲───────────╱
┌──────────────┐  NO
│ COPY TO PACKET│   │
│ END INTO LBR  │   ▼        S203
│ BUFFER       │ ╱───────────╲
└──────────────┘╱  TOP OF I   ╲
   NO          ◄   OR P PICTURE 
 ◄──────────    ╲     ?       ╱
                ╲───────────╱
                    │ YES
 S204               ▼
         ╱─────────────────╲
        ╱      FOUND         ╲   NO
       ╱  PICTURE FETCHED     ╲────────►
          WITH THINNING      
        ╲   INTERVAL ?      ╱
         ╲─────────────────╱
                 │ YES
                 ▼
   ┌──────────────────────┐
   │ I OR P PICTURE FLAG ON│──S205
   └──────────────────────┘
                 │         S206
                 ▼
         ╱───────────╲  YES      S208
        ╱  END OF I   ╲────────┐
           OR P PICTURE         ▼
        ╲     ?      ╱  ┌──────────────────┐
         ╲───────────╱  │ I OR P PICTURE FLAG│
              │NO       │ OFF,COPY TO END   │
 S207         │         │ OF I OR P PICTURE │
              ▼         │ INTO LBR BUFFER   │
   ┌──────────────┐     └──────────────────┘
   │ COPY TO PACKET│            │
   │ END INTO LBR  │            ▼        S209
   │ BUFFER       │      ╱───────────╲
   └──────────────┘ YES ╱  CHECK TO   ╲  NO
         │        ◄──────  PACKET END    ────►
         ▼          ╲  COMPLETED ╱
    ( END )──S211     ╲    ?    ╱
                       ╲───────╱
```

# FIG.15

S172

IPB PICTURE CHECK

START — S220

CHECK pts,dts,I PICTURE
FLAG,P PICTURE FLAG,B
PICTURE FLAG — S221

S222

IN I, P
OR B PICTURE
?

YES

S230

COPY TO PACKET
END INTO LBR
BUFFER

NO

NO

S223

TOP OF
I ,P OR B PICTURE
?

YES

S224

FOUND
PICTURE FETCHED
WITH THINNING
INTERVAL ?

NO

YES

I,P OR B PICTURE FLAG ON — S225

S226

END OF
I, P OR B PICUTRE
?

YES

S228

I,P OR B PICTURE
FLAG OFF,COPY TO END
OF I,P OR B PICTURE
INTO LBR BUFFER

NO

S227

COPY TO PACKET
END INTO LBR
BUFFER

YES

S229

CHECK TO
PACKET END
COMPLETED
?

NO

END — S231

# FIG.16

| EXECUTION TIMES (TIME) / THINNING INTERVAL | 1 | 2 | 3 | 4 | 5 | 6 | 7 | 8 | 9 |
|---|---|---|---|---|---|---|---|---|---|
| 1 | YES | YES | YES | YES | YES | YES | YES | YES | YES |
| 1.5 | YES | YES | NO | YES | YES | NO | YES | YES | NO |
| 2 | YES | NO | YES | NO | YES | NO | YES | NO | YES |
| 3 | YES | NO | NO | YES | NO | NO | YES | NO | NO |
| 4 | YES | NO | NO | NO | YES | NO | NO | NO | YES |

# FIG.17

PACK HEADER

| PACK START CODE | SCR | SYSTEM HEADER | PACKET | ... | PACKET | | ... | PACK START CODE | SCR | SYSTEM HEADER | PACKET | ... | PACKET | | END_CODE |

| PACKET START CODE PREFIX | STREAM ID | PACKET LENGTH | OTHER HEADER DATA | PACKET DATA |

EP 0 901 285 A1

# FIG.18

| SEQUENCE LAYER | SH | GOP | SH | GOP | SH | GOP | SH | GOP |
|---|---|---|---|---|---|---|---|---|

| GOP LAYER | I | B | B | P | B | B | P | B | B | ... | B | P |
|---|---|---|---|---|---|---|---|---|---|---|---|---|

# FIG. 19

# FIG.20

CLIENT SIDE                    SERVER SIDE

S270 — ( START )              ( START ) — S270

S271 — ( LBR OFF OPEN_REQ )

                              ( OPEN_REPLY ) — S272

S272 — ( READ_REQ )

                              [ DATA ] — S273

S274 — ( LBR OFF MODE_REQ )

                              ( MODE_REPLY ) — S275

S276 — ( READ_REQ )

                              [ LBR DATA ] — S277

S278 — ( LBR OFF MODE_REQ )

                              ( MODE_REPLY ) — S279

S280 — ( READ_REQ )

                              [ DATA ] — S281

S282 — ( END )               ( END ) — S282

# FIG.21

VIDEO SERVER — 5

SERVER PROGRAM — 11

LBR PROCESSOR — 12

NETWORK LOAD MEASURING UNIT — 18

CPU LOAD MEASURING UNIT — 19

CLIENT — 9

MPEG DATA PLAYBACK APPLICATION — 14

CLIENT PROGRAM — 13

4

EP 0 901 285 A1

# FIG.22

SERVER INITIATIVE TYPE

CLIENT 9        VIDEO SERVER 5

DATA TRANSFER
REQUEST

DATA
TRANSFER

DATA
TRANSFER

DATA
TRANSFER

DATA
TRANSFER

# FIG.23

```
        ( START )──S100
             │
      ┌──────────────┐
      │ SEND SERVER  │──S101
      │ CONFIRMATION │
      │   REQUEST    │
      └──────────────┘
             │
            S102
    NO    ◇─────────◇
  ┌───────│ REPLY FROM│
  │       │  SERVER ? │
  │       ◇─────────◇
  │            │ YES
  │            │
  │     ┌──────────────┐
  │     │WAIT FOR REQUEST│──S105
  │     │FROM APPLICATION│
  │     └──────────────┘
  │            │
  │          S106
  │       ◇─────────◇
  │       │  DATA     │
  │       │ TRANSFER  │─────────────YES
  │       │ REQUEST ? │
  │       ◇─────────◇
  │         │ NO
```

SEND DATA TRANSFER REQUEST TO SERVER ─ S114

SEND REQUEST TO SERVER ─ S107

WAIT FOR DATA FROM SERVER ─ S115

WAIT FOR REPLY FROM SERVER ─ S108

STORE DATA FROM SERVER INTO BUFFER ─ S116

RETURN REPLY TO APPLICATION ─ S109

CALCULATE OFFSET ─ S117

S118

SIZE REQUESTED FROM APPLICATION> DATA IN BUFFER   YES

( END )

NO

TRANSFER DATA TO APPLICATION ─ S119

# FIG.24

# FIG.25

VIDEO SERVER 5

VIDEO CAMERA 15

REAL-TIME DATA BUFFER 17

REAL-TIME ENCODER 16

SERVER BUFFER 7

LBR BUFFER 8

DISC DEVICE 6

CLIENT BUFFER

CLIENT 9 10

CLIENT BUFFER

CLIENT 9 10

...

4

# FIG.26

CLIENT INITIATIVE TYPE MULTI-CAST

CLIENT A      VIDEO SERVER      CLIENT B

S320 — GROUP PARTICIPATION REQUEST

S321 — DATA TRANSFER REQUEST

DATA TRANSFER — S322

S323 — DATA TRANSFER REQUEST

DATA TRANSFER — S324

S325 — DATA TRANSFER REQUEST

DATA TRANSFER — S326

GROUP PARTICIPATION REQUEST — S327

S329

DATA TRANSFER REQUEST — S328

DATA TRANSFER

S331

DATA TRANSFER REQUEST — S330

DATA TRANSFER

S333

DATA TRANSFER REQUEST — S332

DATA TRANSFER

# FIG.27

START — S140

WAIT FOR REQUEST FROM CLIENT — S141

S310
DATA TRANSFER REQUEST /REAL-TIME DATA TRANSFER REQUEST ?

YES →

S313
FIRST REAL-TIME DATA TRANSFER REQUEST ?

YES → S314
SEND ENCODE START REQUEST TO REAL-TIME ENCODER

NO (from S310)

S311
MULTI-CAST GROUP PARTICIPATION REQUEST ?

NO

YES

NO (from S313)

READ MPEG DATA IN SERVER BUFFER — S315

PROCESSING OF EACH REQUEST — S143

REGISTER IN MULTI-CAST GROUP — S312

S146
LBR MODE ON ?

NO → S149
TRANSMIT DATA IN SERVER BUFFER

S147 YES

LBR PROCESSING

S144 — RETURN REPLY TO CLIENT

S148 — TRANSMIT DATA IN LBR BUFFER

EP 0 901 285 A1

43

# FIG.28

```
            START ──S100                    ┌─────────────────┐
              │                             │ DETERMINE EACH  │
              ▼                             │ PICTURE THINNING│
    ┌──────────────────┐                    │ INTERVAL FROM   │──S110
    │ SEND SERVER      │                    │ NETWORK LOAD    │
    │ CONFIRMATION     │──S101              │ AND CPU LOAD    │
    │ REQUEST          │                    └─────────────────┘
    └──────────────────┘                             │
              │         S102                         ▼        S111
              ▼                                  ◇ CHANGE ◇
   NO    ◇ REPLY FROM ◇                          IN THINNING      NO
  ◄──────   SERVER ?                             INTERVAL ?  ──────►
              │                                      │
              ▼ YES                                  ▼ YES
    ┌──────────────────┐                    ┌─────────────────┐
    │ START NETWORK    │──S103              │ SEND CHANGE     │──S112
    │ LOAD MEASUREMENT │                    │ REQUEST TO SERVER│
    └──────────────────┘                    └─────────────────┘
              │                                      │
              ▼                                      ▼
    ┌──────────────────┐                    ┌─────────────────┐
    │ START CPU LOAD   │──S104              │ WAIT FOR REPLY  │──S113
    │ MEASUREMENT      │                    │ FROM SERVER     │
    └──────────────────┘                    └─────────────────┘
              │                                      │
              ▼                                      ▼
    ┌──────────────────┐                    ┌─────────────────┐
    │ WAIT FOR REQUEST │──S105              │ SEND DATA TRANSFER│
    │ FROM APPLICATION │                    │ REQUEST/REAL-TIME│──S114
    └──────────────────┘                    │ DATA TRANSFER   │
              │         S106                │ REQUEST TO SERVER│
              ▼                             └─────────────────┘
         ◇ DATA     ◇                               │
          TRANSFER                                  ▼
        REQUEST/REAL-TIME  YES             ┌─────────────────┐
         DATA TRANSFER ────────►           │ WAIT FOR DATA FROM│──S115
           REQUEST ?                       │ SERVER          │
     S107     │                            └─────────────────┘
              ▼ NO                                  │
    ┌──────────────────┐                            ▼
    │ SEND REQUEST TO  │                   ┌─────────────────┐
    │ SERVER (INCLUDING│                   │ STORE DATA FROM │──S116
    │ MULTI-CAST       │                   │ SERVER INTO BUFFER│
    │ PARTICIPATION    │                   └─────────────────┘
    │ REQUEST)         │                            │
    └──────────────────┘                            ▼
              │                            ┌─────────────────┐
              ▼                            │ CALCULATE OFFSET│──S117
    ┌──────────────────┐                   └─────────────────┘
    │ WAIT FOR REPLY   │──S108                      │   S118
    │ FROM SERVER      │                            ▼
    └──────────────────┘                    ◇ SIZE REQUESTED ◇   YES
              │                              FROM APPLICATION> ──────►
              ▼                                DATA IN BUFFER
    ┌──────────────────┐                            │
    │ RETURN REPLY TO  │──S109                      ▼ NO
    │ APPLICATION      │                   ┌─────────────────┐
    └──────────────────┘                   │ TRANSFER DATA   │──S119
              │                            │ TO APPLICATION  │
              ▼                            └─────────────────┘
            END
```

# FIG.29

```
        ( START )── S340
              │
              ▼
    ┌──────────────────┐
    │ WAIT FOR QUICK   │
    │ FORWARDING       │── S341
    │ REQUEST          │
    └──────────────────┘
              │
              ▼
    ┌──────────────────┐
    │ READ MPEG DATA   │── S145
    │ IN BUFFER        │
    └──────────────────┘
              │
              ▼
    ┌──────────────────┐
    │ LBR PROCESSING   │── S147
    └──────────────────┘
              │
              ▼
    ┌──────────────────┐
    │ DISTRIBUTE LBR   │── S148
    │ DATA             │
    └──────────────────┘
              │
              ▼
        ( END )── S343
```

# FIG.30

START

WAIT FOR REQUEST FROM APPLICATION — S101

SEND QUICK FORWARDING REQUEST — S350

WAIT FOR QUICK FORWARDING DATA — S115

STORE QUICK FORWARDING DATA IN BUFFER — S116

CALCULATE OFFSET — S117

S118
SIZE REQUESTED FROM APPLICATION≥LBR DATA IN BUFFER — YES

NO

TRANSFER QUICK FORWARDING DATA TO APPLICATION — S119

REPEAT DATA TRANSFER N (1≤N) TIMES — S351

END

S351
DATA TRANSFER

START

WAIT FOR REQUEST FROM APPLICATION — S101

TRANSFER QUICK FORWARDING DATA IN BUFFER TO APPLICATION — S119

CALCULATE OFFSET — S117

END

# FIG.31

# FIG.32

# FIG.33

| INTERNATIONAL SEARCH REPORT | International application No. |
|---|---|
| | PCT/JP97/00562 |

**A. CLASSIFICATION OF SUBJECT MATTER**

Int. Cl$^6$ H04N7/173

According to International Patent Classification (IPC) or to both national classification and IPC

**B. FIELDS SEARCHED**

Minimum documentation searched (classification system followed by classification symbols)

Int. Cl$^6$ H04N7/173

Documentation searched other than minimum documentation to the extent that such documents are included in the fields searched

Jitsuyo Shinan Koho      1940 - 1996
Kokai Jitsuyo Shinan Koho    1971 - 1996

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 07-23353, A (Canon Inc.), | 1, 2, 5, |
| | January 24, 1995 (24. 01. 95) | 11, 16, 18 |
| Y | & EP, 589657, A2 | 19 |
| A | | 3, 4, 6-10, |
| | | 12-15, 17, |
| | | 20 |
| | | |
| Y | JP, 08-331514, A (NEC Corp.), | 19 |
| A | December 13, 1996 (13. 12. 96)(Family: none) | 3, 4, 6-10 |
| | | |
| A | JP, 02-211787, A (NEC Corp.), | 15 |
| | August 23, 1990 (23. 08. 90)(Family: none) | |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 26, 1997 (26. 05. 97) | June 3, 1997 (03. 06. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

49